(19) **Europäisches Patentamt / European Patent Office / Office européen des brevets**

(11) **EP 4 429 156 A1**

(12) **EUROPEAN PATENT APPLICATION**
published in accordance with Art. 153(4) EPC

(43) Date of publication:
**11.09.2024 Bulletin 2024/37**

(21) Application number: **22890465.2**

(22) Date of filing: **07.11.2022**

(51) International Patent Classification (IPC):
**H04L 5/00** *(2006.01)*    **H04W 72/00** *(2023.01)*
**H04W 72/04** *(2023.01)*    **H04W 48/10** *(2009.01)*

(52) Cooperative Patent Classification (CPC):
**H04L 5/00; H04W 48/10; H04W 72/00; H04W 72/04**

(86) International application number:
**PCT/KR2022/017307**

(87) International publication number:
**WO 2023/080734 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 KR 20210151136**

(71) Applicant: **LG Electronics Inc.**
**Yeongdeungpo-gu**
**Seoul 07336 (KR)**

(72) Inventors:
- **LEE, Youngdae**
  **Seoul 06772 (KR)**
- **KIM, Kyuseok**
  **Seoul 06772 (KR)**
- **KIM, Jaehyung**
  **Seoul 06772 (KR)**
- **YANG, Suckchel**
  **Seoul 06772 (KR)**
- **KIM, Seonwook**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING AND RECEIVING GROUP-COMMON INFORMATION IN WIRELESS COMMUNICATION SYSTEM**

(57) Disclosed are a method and device for transmitting and receiving group-common information in a wireless communication system. A method for a terminal to receive group-common information in a wireless communication system according to an embodiment disclosed herein may comprise the steps of: receiving, from a network, configuration information about one or more channel state information-reference signal (CSI-RS) resource sets for a tracking reference signal (TRS); receiving group-common downlink control information (DCI) from the network on the basis of a specific CSI-RS resource set among the one or more CSI-RS resource sets and a group-common identifier; and receiving, from the network, a group-common physical downlink shared channel (PDSCH) scheduled by the group-common DCI. Here, the one or more CSI-RS resource sets may be configured for one of one or more cell groups and/or one or more group-common identifiers including the group-common identifier.

FIG.12

START

Receive configuration information on at least one CSI-RS resource set for a TRS   S1210

Receive group common DCI based on a group common identifier and a specific CSI-RS resource set   S1220

Receive a group common PDSCH scheduled by the group common DCI   S1230

END

**Description**

[Technical Field]

The present disclosure relates to a wireless communication system, and more particularly, to a method and apparatus for transmitting and receiving group common information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for transmitting and receiving group common information.

A technical object of the present disclosure is to provide a method and apparatus for applying a Tracking Reference Signal (TRS) in relation to group common transmission for multicast and broadcast.

A technical object of the present disclosure is to provide a method and apparatus for establishing a mapping relationship between a TRS, a synchronization signal block (SSB), and/or a monitoring occasion (MO) in relation to group common transmission fosr multicast and broadcast.

A technical object of the present disclosure is to provide a method and apparatus for configuring a common frequency resource (CFR) in relation to group common transmission for multicast and broadcast.

The technical objects to be achieved by the present disclosure are not limited to the above-described technical objects, and other technical objects which are not described herein will be clearly understood by those skilled in the pertinent art from the following description.

[Technical Solution]

A method of receiving group common information by a user equipment (UE) in a wireless communication system according to an aspect of the present disclosure may comprise: receiving, from a network, configuration information on at least one channel state information-reference signal (CSI-RS) resource set for a tracking reference signal (TRS); receiving, from the network, group common downlink control information (DCI) based on a group common identifier and a specific CSI-RS resource set among the at least one CSI-RS resource set; and receiving, from the network, a group common physical downlink shared channel (PDSCH) scheduled by the group common DCI. Herein, the at least one CSI-RS resource set may be configured for at least one of one or more group common identifiers or one or more cell groups including the group common identifier.

A method of transmitting group common information by a base station in a wireless communication system according to an additional aspect of the present disclosure may comprise: transmitting, to a user equipment (UE), configuration information on at least one channel state information-reference signal (CSI-RS) resource set for a tracking reference signal (TRS); transmitting, to the UE, group common downlink control information (DCI) based on a group common identifier and a specific CSI-RS resource set among the at least one CSI-RS resource set; and transmitting, to the UE, a group common physical downlink shared channel (PDSCH) scheduled by the group common DCI. Herein, the at least one CSI-RS resource set may be configured for at least one of one or more group common identifiers or one or more cell groups including the group common identifier.

[Technical Effects]

According to an embodiment of the present disclosure, a method and apparatus for applying a tracking reference signal (TRS) in relation to group common transmission for multicast and broadcast may be provided.

According to an embodiment of the present disclosure, a method and apparatus for establishing a mapping relationship between a TRS, a synchronization signal block (SSB), and/or a monitoring occasion (MO) in relation to group common transmission for multicast and broadcast may be provided.

According to an embodiment of the present disclosure, a method and apparatus for configuring a common frequency resource (CFR) in relation to group common transmission for multicast and broadcast may be provided.

According to an embodiment of the present disclosure, when a user equipment (UE) receives broadcast transmission from multiple cells in the same SFN (Single Frequency Network) area, performance degradation may be prevented by supporting Quasi co-location (QCL) source for each service/service area.

According to an embodiment of the present disclosure, by enabling a terminal in an idle mode or an inactive mode to configure a TRS, degradation of reception performance of SFN-based broadcast transmission may be prevented.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method of multiple TRPs transmission in a wireless communication system to which the present disclosure may be applied.

FIG. 8 illustrates a HARQ-ACK process for downlink data in a wireless communication system to which the present disclosure can be applied.

FIG. 9 illustrates a resource block group (RBG) or resource block (RB) bundle for multicast transmission in a wireless communication system to which the present disclosure may be applied.

FIG. 10 illustrates a HARQ-ACK transmission and reception procedure for multicast PDSCH according to an embodiment of the present disclosure.

FIG. 11 illustrates group common transmission and HARQ-ACK reporting for this in a wireless communication system to which disclosure may be applied.

FIG. 12 is a diagram illustrating operations of a terminal for a method for transmitting and receiving group common information according to an embodiment of the present disclosure.

FIG. 13 is a diagram illustrating an operation of a base station for a method for transmitting and receiving group common information according to an embodiment of the present disclosure.

FIG. 14 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

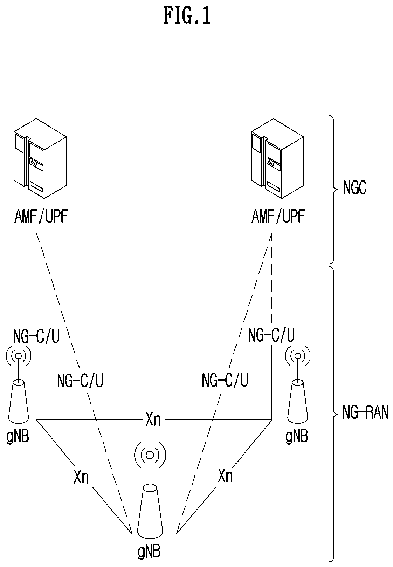

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

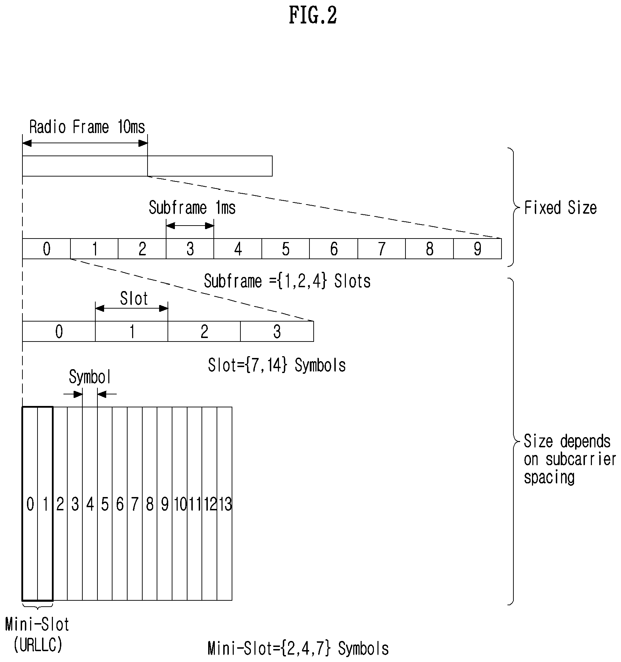

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

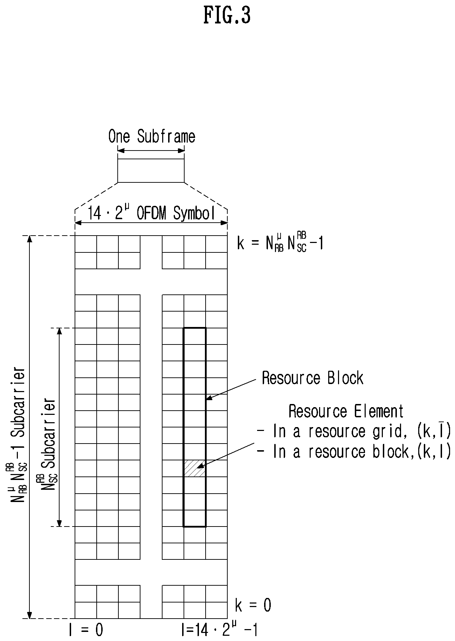

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,...,$N_{RB}^{\mu}N_{sc}^{RB}$-1 is an index in a frequency domain and l'=0, ...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequencyposition of point A expressed as in ARFCN (absolute radiofrequency channel number).

Common resource blocks are numbered from 0 to the top in a frequency domain for a subcarrier spacing

configuration μ. The center of subcarrier 0 of common resource block 0 for a subcarrier spacing configuration μ is identical to 'point A'. A relationship between a common resource block number $n_{CRB}{}^{\mu}$ and a resource element (k,l) for a subcarrier spacing configuration μ in a frequency domain is given as in the following Equation 1.

【Equation 1】

$$n_{CRB}^{\mu}= \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}{}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}{}^{start,\mu}$ is a common resource block that a BWP starts relatively to common resource block 0.

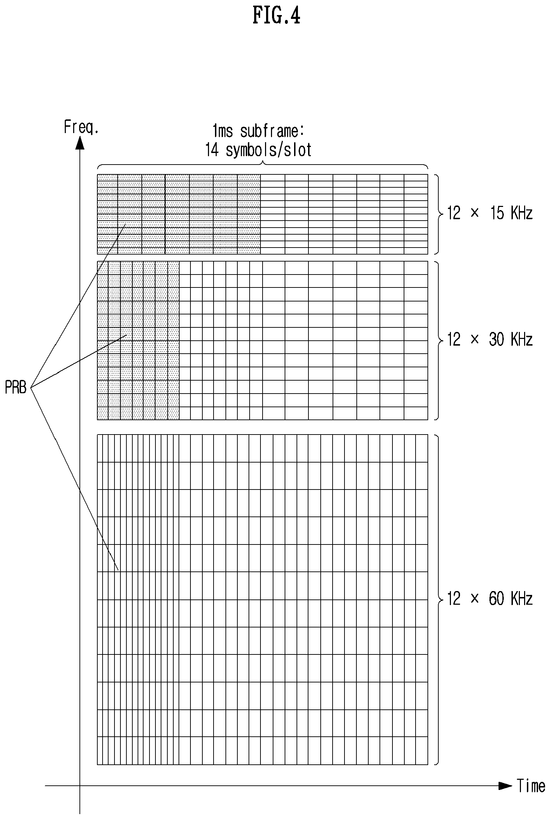

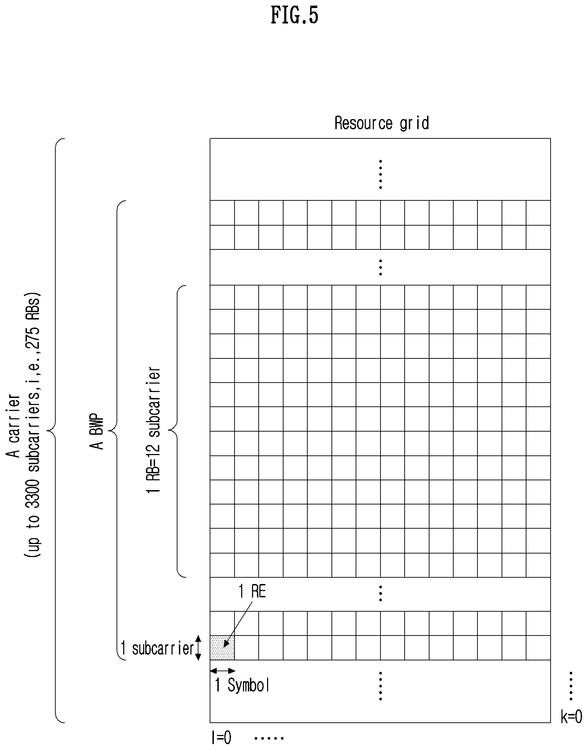

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

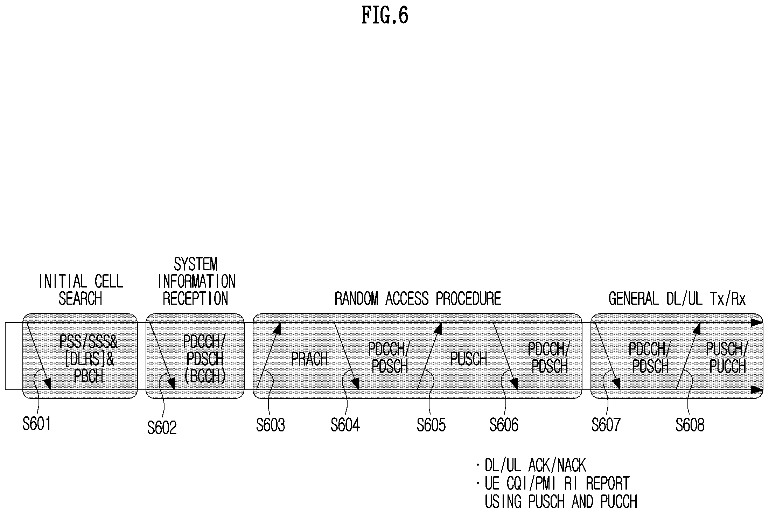

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the belowdescribed method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

Hereinafter, a method for improving reliability in Multi-TRP will be described.

As a transmission and reception method for improving reliability using transmission in a plurality of TRPs, the following two methods may be considered.

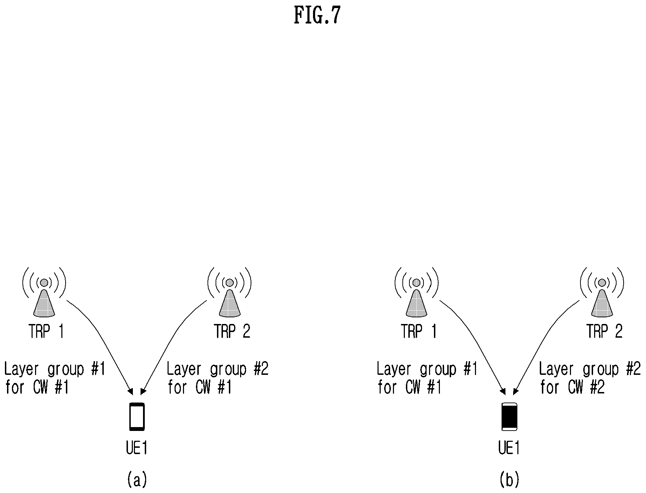

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Multi-TRP scheduled by at least one DCI may be performed as follows:

i) Scheme 1 (SDM): n (n is a natural number) TCI states in a single slot in overlapping time and frequency resource allocation

- Scheme 1a: Each transmission occasion is one layer or set of layers of the same TB, and each layer or set of layers is associated with one TCI and one set of DMRS port(s). A single codeword with one redundancy version (RV) is used for all layers or sets of layers. For a UE, different coded bits are mapped to different layers or sets of layers with specific mapping rules.
- Scheme 1b: Each transmission occasion is one layer or set of layers of the same TB, and each layer or set of layers is associated with one TCI and one set of DMRS port(s). A single codeword with one RV is used for each spatial layer or set of layers. RVs corresponding to each spatial layer or set of layers may be the same or different.
- Scheme 1c: Each transmission occasion is one layer of the same TB having one DMRS port associated with multiple TCI state indices or one layer of the same TB with multiple DMRS ports associated with multiple TCI indices in turn (one by one).

In schemes 1a and 1c described above, the same MCS is applied to all layers or sets of layers.

ii) Scheme 2 (FDM): n (n is a natural number) TCI states in a single slot in non-overlapping frequency resource allocation. Each non-overlapping frequency resource allocation is associated with one TCI state. The same single/multiple DMRS port(s) is associated with all non-overlapping frequency resource allocations.

- Scheme 2a: A single codeword with one RV is used across an entire resource allocation. For UE, a common RB mapping (mapping of codeword to layer) is applied across all resource allocations.
- Scheme 2b: A single codeword with one RV is used for each non-overlapping frequency resource allocation. RVs corresponding to each non-overlapping frequency resource allocation may be the same or different.

In scheme 2a, the same MCS is applied to all non-overlapping frequency resource allocations.

iii) Scheme 3 (TDM): n (n is a natural number) TCI states in a single slot in non-overlapping time resource allocation. Each transmission occasion of a TB has one TCI and one RV with time granularity of a mini-slot. All transmission occasion(s) in a slot use a common MCS with the same single or multiple DMRS port(s). An RV/TCI state may be the same or different among transmission occasions.

iv) Scheme 4 (TDM): n (n is a natural number) TCI states in K (n<=K, K is a natural number) different slots. Each transmission occasion of a TB has one TCI and one RV. All transmission occasion(s) across K slots use a common MCS with the same single or multiple DMRS port(s). An RV / TCI state may be the same or different among transmission occasions.

Hereinafter, in the present disclosure, DL MTRP-URLLC means that M-TRPs transmit the same data(e.g., transport block, TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is indicated which QCL RS/type (i.e., a DL TCI (state)) should be used in a layer/time/frequency resource receiving the same data/DCI from a base station. For example, when the same data/DCI is received in resource 1 and resource 2, a DL TCI state used in resource 1 and a DL TCI state used in resource 2 may be indicated. UE may achieve high reliability because it receives the same data/DCI through resource 1 and resource 2. Such DL MTRP URLLC may be applied to a PDSCH/a PDCCH.

Conversely, UL MTRP-URLLC means that M-TRPs receive the same data/UCI from UE by using a different layer/time/frequency resource. For example, TRP 1 receives the same data/UCI from UE in resource 1 and TRP 2 receives the same data/UCI from UE in resource 2 and shares received data/UCI through a backhaul link connected between TRPs. UE configured with a UL MTRP-URLLC transmission method transmits the same data/UCI by using a different layer/time/frequency resource. Here, UE is indicated which Tx beam and which Tx power (i.e., a UL TCI state) should be used in a layer/time/frequency resource transmitting the same data/DCI from a base station. For example, when the same data/UCI is received in resource 1 and resource 2, a UL TCI state used in resource 1 and a UL TCI state used in resource 2 may be indicated. Such UL MTRP URLLC may be applied to a PUSCH/a PUCCH.

In addition, in methods proposed in the present disclosure, when a specific TCI state (or a TCI) is used (/mapped) in receiving data/DCI/UCI for any frequency/time/space resource, it may mean that a DL estimates a channel from a DMRS by using a QCL type and a QCL RS indicated by a corresponding TCI state in that frequency/time/space resource and receives/demodulates data/DCI to an estimated channel. It may mean that an UL transmits/modulates a DMRS and data/UCI by using a Tx beam and/or Tw power indicated by a corresponding TCI state in that frequency/time/space resource.

The UL TCI state has Tx beam and/or Tx power information of UE and spatial relation information, etc. instead of a TCI state may be configured to UE through other parameter. An UL TCI state may be directly indicated to UL grant DCI or may mean spatial relation information of an SRS resource indicated by an SRI (SRS resource indicator) field of UL grant DCI. Alternatively, it may mean an OL (open loop) Tx power control parameter connected to a value indicated by a SRI field of UL grant DCI (j: an index for open loop parameter Po and alpha ($\alpha$) (up to 32 parameter value sets per cell), q_d: an index of a DL RS resource for PL (pathloss) measurement (measurement of up to 3 per cell), l: a closed loop power control process index (up to 2 processes per cell)).

On the other hand, it is assumed that MTRP-eMBB means that M-TRPs transmit other data by using a different layer/time/frequency, UE configured with a MTRP-eMBB transmission method is indicated multiple TCI states with DCI and data received by using a QCL RS of each TCI state is different data.

In addition, whether of MTRP URLLC transmission/reception or MTRP eMBB transmission/reception may be understood by UE by separately classifying a RNTI for MTRP-URLLC and a RNTI for MTRP-eMBB and using them. In other words, when CRC masking of DCI is performed by using a RNTI for URLLC, it is considered as URLLC transmission and when CRC masking of DCI is performed by using a RNTI for eMBB, it is considered as eMBB transmission. Alternatively, a base station may configure MTRP URLLC transmission/reception or may configure MTRP eMBB transmission/reception to UE through other new signaling.

In the present disclosure, for convenience of a description, a proposal is applied by assuming cooperative transmission/reception between 2 TRPs, but it may be extended and applied in 3 or more multi-TRP environments and it may be also extended and applied in multi-panel environments. A different TRP may be recognized by UE as a different transmission configuration indication (TCI) state. That is, when UE receives/transmits data/DCI/UCI by using TCI state 1, it means that data/DCI/UCI is received/transmitted from/to TRP 1.

A proposal of the present disclosure may be utilized in a situation where MTRP cooperatively transmits a PDCCH (the same PDCCH is repetitively or partitively transmitted) and some proposals may be utilized even in a situation where MTRP cooperatively transmits a PDSCH or cooperatively receives a PUSCH/a PUCCH.

In addition, in the present disclosure below, the meaning that a plurality of base stations (i.e., MTRP) repetitively transmits the same PDCCH may mean the same DCI is transmitted by a plurality of PDCCH candidates, and it is equivalent with the meaning that a plurality of base stations repetitively transmits the same DCI. The same DCI may mean two DCI with the same DCI format/size/payload. Alternatively, although two DCI have a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception time of DCI. Here, if DCI received at a time of n and DCI received at a time of n+1 represent the same scheduling result to UE, a TDRA field of two DCI is different, and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure below, when a plurality of base stations (i.e., MTRP) divide and transmit the same PDCCH, it may mean that one DCI is transmitted through one PDCCH candidate, but TRP 1 transmits some resources in which the PDCCH candidate is defined and TRP 2 transmits the remaining resources. For example, when TRP 1 and TRP 2 divide and transmit a PDCCH candidate corresponding to an aggregation level m1 + m2, the PDCCH candidate is divided into PDCCH candidate 1 corresponding to aggregation level m1 and PDCCH candidate 2 corresponding to aggregation level m2, and TRP 1 transmits the PDCCH candidate 1 and TRP 2 transmits the PDCCH candidate 2 using different time/frequency resources. After receiving the PDCCH candidate 1 and the PDCCH candidate 2, a UE generates a PDCCH candidate corresponding to aggregation level m1+m2 and attempts DCI decoding.

When the same DCI is divided and transmitted to several PDCCH candidates, there may be two implementation methods.

First, a DCI payload (control information bits + CRC) may be encoded through one channel encoder (e.g., a polar encoder), coded bits obtained as a result may be divided into two TRPs and transmitted. In this case, an entire DCI payload may be encoded in coded bits transmitted by each TRP, or only a part of a DCI payload may be encoded. Second, a DCI payload (control information bits + CRC) may be divided into two (DCI 1 and DCI 2) and each can be encoded through a channel encoder (e.g., polar encoder). Thereafter, two TRPs may transmit coded bits corresponding to DCI 1 and coded bits corresponding to DCI 2, respectively.

In summary, it may be as follows that a plurality of base stations (i.e., MTRP) divide/repeat the same PDCCH and transmit over a plurality of monitoring occasions (MO).

    i) it may mean that each base station (i.e., STRP) repeatedly transmits coded DCI bits obtained by encoding all DCI contents of a corresponding PDCCH through each MO; or,
    ii) it may mean that coded DCI bits obtained by encoding all DCI contents of a corresponding PDCCH are divided into a plurality of parts, and each base station (i.e., STRP) transmits a different part through each MO; or
    iii) it may mean that DCI contents of a corresponding PDCCH are divided into a plurality of parts, and each base station (i.e., STRP) separately encodes different parts and transmits them through each MO.

That is, it may be understood that a PDCCH is transmitted multiple times over several transmission occasions (TO) regardless of repeated transmission or divided transmission of the PDCCH. Here, a TO means a specific time/frequency resource unit in which a PDCCH is transmitted. For example, if a PDCCH is transmitted multiple times (in a specific resource block (RB)) over slots 1, 2, 3, and 4, a TO may mean each slot, or if a PDCCH is transmitted multiple times (in a specific slot) over RB sets 1, 2, 3, and 4, a TO may mean each RB set, or if a PDCCH is transmitted multiple times over different times and frequencies, a TO may mean each time/frequency resource. In addition, a TCI state used for DMRS channel estimation for each TO may be configured differently, and it may be assumed that TOs in which a TCI state is configured differently are transmitted by different TRPs/panels. When a plurality of base stations repeatedly transmits or dividedly transmits a PDCCH, it means that the PDCCH is transmitted over a plurality of TOs, and the union of TCI states configured in corresponding TOs is configured with two or more TCI states. For example, if a PDCCH is transmitted over TOs 1,2,3,4, TCI states 1,2,3,4 may be configured in each of TOs 1,2,3,4, respectively, which means that TRP i transmits cooperatively a PDCCH in TO i.

For a plurality of TOs indicated to a UE to repeatedly transmit or dividedly transmit a PDCCH/PDSCH/PUSCH/PUCCH, UL transmits to a specific TRP or DL receives from a specific TRP in each TO. Here, a UL TO (or TO of TRP 1) transmitted to TRP 1 means a TO using the first value among two spatial relations, two UL TCIs, two UL power control parameters and/or two pathloss reference signals (PLRS) indicated to a UE, and a UL TO (or TO of TRP 2) transmitted to TRP 2 means a TO using the second value among two spatial relations, two UL TCIs, two UL power control parameters and/or two PLRSs indicated to a UE. Similarly, for DL transmission, a DL TO (or TO of TRP 1) transmitted by TRP 1 means a TO using the first value among two DL TCI states (e.g., when two TCI states are configured in CORESET) indicated to a UE, and a DL TO (or TO of TRP 2) transmitted by TRP 2 means a TO using the second value among two DL TCI states (e.g., when two TCI states are configured in CORESET) indicated to a UE.

The proposal of the present disclosure can be extended and applied to various channels such as PUSCH/PUCCH/PDSCH/PDCCH.

The proposal of the present disclosure can be extended and applied to both a case of repeated transmission and a case of divided transmission the channel on different time/frequency/spatial resources.

Data transmission and HARQ (Hybrid Automatic Repeat and request)-ACK (Acknowledgement) process

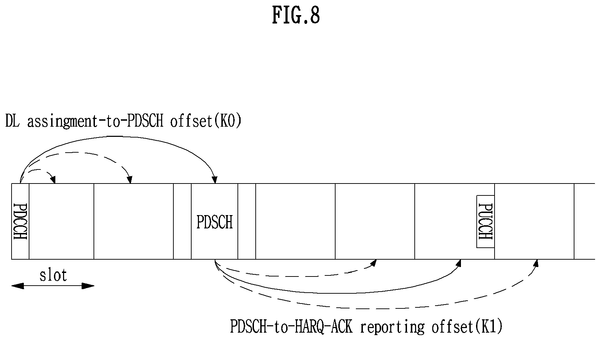

FIG. 8 illustrates a HARQ-ACK process for downlink data in a wireless communication system to which the present disclosure can be applied.

Referring to FIG. 8, a UE may detect a PDCCH in slot #n. Here, a PDCCH includes downlink scheduling information (e.g., DCI formats 1_0 and 1_1), and a PDCCH indicates a DL assignment-to-PDSCH offset (K0) and a PDSCH-HARQ-ACK reporting offset (K1). For example, DCI formats 1_0 and 1_1 may include the following information.

    - Frequency domain resource assignment: Indicates an RB resource (e.g., one or more (dis)contiguous RBs) allocated to a PDSCH

- Time domain resource assignment: K0, indicating a start position (e.g., OFDM symbol index) and a length (e.g., number of OFDM symbols) of a PDSCH in a slot
- PDSCH HARQ feedback timing indicator (PDSCH-to-HARQ_feedback timing indicator): Indicates K1
- HARQ process number (4 bits): Indicates HARQ process ID (Identity) for data (e.g., PDSCH, TB)
- PUCCH resource indicator (PRI): Indicates a PUCCH resource to be used for UCI transmission among a plurality of PUCCH resources in a PUCCH resource set

Thereafter, a UE may receive a PDSCH in slot #(n+K0) according to scheduling information of slot #n, and then transmit UCI through a PUCCH in slot #(n+K1. Here, UCI includes a HARQ-ACK response for a PDSCH. If a PDSCH is configured to transmit up to 1 TB, a HARQ-ACK response may be composed of 1-bit. When a PDSCH is configured to transmit up to two TBs, a HARQ-ACK response may be composed of 2-bits if spatial bundling is not configured and 1-bit if spatial bundling is configured. When a HARQ-ACK transmission time for a plurality of PDSCHs is designated as slot #(n+K1), UCI transmitted in slot #(n+K1) includes HARQ-ACK responses for a plurality of PDSCHs.

Multimedia Broadcast/Multicast Service (MBMS)

3GPP MBMS can be divided into i) a single frequency network (SFN) method in which a plurality of base station cells are synchronized to transmit the same data through a physical multicast channel (PMCH) and ii) SC-PTM (Single Cell Point To Multipoint) method broadcasting within a cell coverage through a PDCCH/PDSCH channel. The SFN method is used to provide broadcasting services over a wide area (e.g., MBMS area) through semi-statically allocated resources, while the SC-PTM method is mainly used to provide broadcasting services only within a cell coverage through dynamic resources.

The SC-PTM provides one logical channel, an SC-MCCH (Single Cell Multicast Control Channel) and one or a plurality of logical channels, an SC-MTCH (Single Cell Multicast Traffic Channel). These logical channels are mapped to a downlink shared channel (DL-SCH), which is a transport channel, and a PDSCH, which is a physical channel. A PDSCH transmitting SC-MCCH or SC-MTCH data is scheduled through a PDCCH indicated by a group-RNTI (G-RNTI). In this case, a temporary multicast group ID (TMGI) corresponding to a service identifier (ID) may be mapped one-to-one with a specific G-RNTI value. Therefore, if a base station provides multiple services, multiple G-RNTI values may be allocated for SC-PTM transmission. One or a plurality of UEs may perform PDCCH monitoring using a specific G-RNTI to receive a specific service. Here, a DRX on-duration period may be configured exclusively for an SC-PTM for a specific service/specific G-RNTI. In this case, the UEs wake up only for a specific on-duration period and perform PDCCH monitoring for the G-RNTI.

Method of configuring multicast broadcast service (MBS)-related common frequency resource (CFR)

In relation to MBS, the base station may configure a specific frequency resource area for multicast and/or broadcast to the UE,and the corresponding specific frequency resource region may be referred to as CFR. The base station may configure configuration information for the corresponding CFR to the UE through higher layer signaling (e.g. RRC signaling, etc.).

In this regard, depending on the start and length of the CFR, the size of the first and last RBG, RB bundle, or precoding resource block group (PRG) for multicast may be different from the size corresponding to the BWP of the UE.

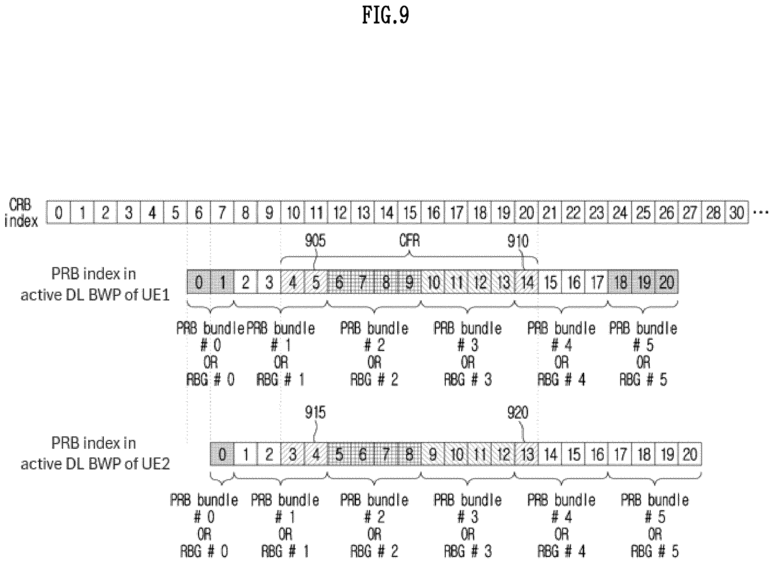

FIG. 9 illustrates a resource block group (RBG) or resource block (RB) bundle for multicast transmission in a wireless communication system to which the present disclosure may be applied.

Referring to FIG. 9, two UEs may exist for the same multicast group. At this time, the RBG or RB bundle size for both unicast and multicast is 4, and the first RBG or RB bundle (905, 915) and the last RBG or RB bundle (910, 920) for multicast may include fewer RBs than the RBG or RB bundle within the CFR.

In this case, the unicast RBG/PRG may overlap with the start/end of the CFR. When RBG/PRG overlaps with the start/end of CFR, it may not be clear what the UE shall assume regarding the frequency domain resource assignment (FDRA) of the unicast PDSCH. This may be left to the implementation of the scheduler (e.g. base station). However, configuring the CFR so that the unicast RBGs/PRGs for all UEs in the same multicast group are aligned with the start/end of the CFR may be difficult because the unicast RBGs/PRGs are configured to be UE-specific.

In consideration of these points, Hereinafter, in the present disclosure, a method of dividing the unicast RBG/PRG overlapping with the start/end of the CFR into two parts and indexing each part separately may be considered. Additionally/alternatively, a method may be considered in which the UE assumes that only RB(s) outside the CFR area are used for the unicast PDSCH for the unicast RBG/PRG overlapping the boundary of the CFR. At this time, the latter method may be preferred because it is relatively simple.

Broadcast method of system information

In an existing NR wireless communication system, system information may be broadcast as follows.

For SI message acquisition, the PDCCH monitoring occasion(s) is determined according to searchSpaceOtherSystemInformation.

If searchSpaceOtherSystemInformation is set to 0, the PDCCH monitoring occasion for receiving SI messages in the SI-window is the same as the PDCCH monitoring occasion for SIB1, where the mapping between the PDCCH monitoring occasion and SSB is specified (e.g., refer to 3GPP TS 38.213). If searchSpaceOtherSystemInformation is not set to 0, the number of PDCCH monitoring times for SI messages is determined based on the indicated search space indicated by searchSpaceOtherSystemInformation. PDCCH monitoring occasions for SI messages that do not overlap with UL symbols (e.g., UL symbols determined according to tdd-UL-DL-ConfigurationCommon) are numbered sequentially starting from 1 in the SI-window.

The $[x*N+K]^{th}$ PDCCH monitoring occasion(s) for the SI message in the SI-window corresponds to the $K^{th}$ transmitted SSB. Here, x = 0, 1, ...X-1, K = 1, 2, ... N, where N is the number of actual transmitted SSBs determined according to ssb-PositionsInBurst in SIB1; X is equal to CEIL (PDCCH monitoring number/N in SI-window). Here, CEIL() means ceiling function.

The actually transmitted SSBs are numbered sequentially from 1 in ascending order of the SSB index. The UE assumes that the PDCCH for the SI message in the SI-window is transmitted in at least one PDCCH monitoring occasion corresponding to each transmitted SSB, and the selection of the SSB for the received SI message depends on the UE implementation.

TRS-related operations and configurations

In an existing NR wireless communication system, periodic TRS and aperiodic TRS may operate as follows.

For the periodic CSI-RS resource of the NZP-CSI-RS-ResourceSet configured with the higher layer parameter trs-Info, the UE shall expect the TCI state to indicate one of the following quasi co-location (QCL)(s):

- 'typeC' with SS/PBCH blocks and, if applicable, 'typeD' with the same SS/PBCH blocks; or
- 'typeC' with SS/PBCH blocks and, if applicable, 'typeD' with CSI-RS resources in NZP-CSI-RS-ResourceSet configured with the higher layer parameter repetition.

For the aperiodic CSI-RS resource of the NZP-CSI-RS-ResourceSet configured with the higher layer parameter trs-Info, the UE shall expect the TCI-State to indicate qcl-Type set to 'typeA' with periodic CSI-RS resources in the NZP-CSI-RS-ResourceSet configured with the higher layer parameter trs-Info. Additionally, if applicable, the UE shall expect the TCI-State to indicate qcl-Type set to 'typeD' with the same periodic CSI-RS resource.

For the CSI-RS resource of the NZP-CSI-RS-ResourceSet configured without the higher layer parameter trs-Info and configured without the higher layer parameter repetition, the UE shall expect the TCI state to indicate one of the following QCL type(s):

- 'typeA' with CSI-RS resources in NZP-CSI-RS-ResourceSet configured with higher layer parameter trs-Info and, if applicable, 'typeD' with same CSI-RS resources; or
- 'typeA' with CSI-RS resources in NZP-CSI-RS-ResourceSet configured with higher layer parameter trs-Info and, if applicable, 'typeD' with SS/PBCH blocks; or
- 'typeA' with CSI-RS resources in NZP-CSI-RS-ResourceSet configured with the higher layer parameter trs-Info, and 'typeD' with CSI-RS resources in NZP-CSI-RS-ResourceSet configured with the higher layer parameter repetition, if applicable; or

If 'typeD' does not apply, 'typeB' with the CSI-RS resource in the NZP-CSI-RS-ResourceSet configured with the higher layer parameter trs-Info.

For CSI-RS resources in the NZP-CSI-RS-ResourceSet configured with the higher layer parameter repetition, the UE shall expect the TCI status to indicate one of the following QCL type(s):

- 'typeA' with CSI-RS resources in NZP-CSI-RS-ResourceSet configured with the higher layer parameter trs-Info and, if applicable, 'typeD' with same CSI-RS resources; or
- 'typeA' with CSI-RS resources in NZP-CSI-RS-ResourceSet configured with the higher layer parameter trs-Info, and 'typeD' with CSI-RS resources in NZP-CSI-RS-ResourceSet configured with the higher layer parameter repetition, if applicable; or
- 'typeC' with SS/PBCH blocks and, if applicable, 'typeD' with the same SS/PBCH blocks.

RRC configurations related to the TRS described above may be as shown in Tables 6 to 10 below.

Table 6 illustrates CSI-ResourceConfig. The CSI-ResourceConfig information element (IE) defines a group of one or more NZP-CSI-RS-ResourceSet, CSI-IM-ResourceSet, and/or CSI-SSB-ResourceSet.

[Table 6]

```
CSI-ResourceConfig ::= SEQUENCE {
csi-ResourceConfigId CSI-ResourceConfigId,
csi-RS-ResourceSetList CHOICE {
nzp-CSI-RS-SSB SEQUENCE {
nzp-CSI-RS-ResourceSetList SEQUENCE (SIZE (1..maxNrofNZP-CSI-RS-ResourceSetsPerConfig)) OF
NZP-CSI-RS-ResourceSetId OPTIONAL, -- Need R
csi-SSB-ResourceSetList SEQUENCE (SIZE (1..maxNrofCSI-SSB-ResourceSetsPerConfig)) OF CSI-
SSB-ResourceSetId OPTIONAL -- Need R
},
csi-IM-ResourceSetList SEQUENCE (SIZE (1..maxNrofCSI-IM-ResourceSetsPerConfig)) OF CSI-IM-
ResourceSetId
},
bwp-Id BWP-Id,
resourceType ENUMERATED { aperiodic, semiPersistent, periodic },
...
}
```

In relation to Table 6 above, Table 7 illustrates NZP-CSI-RS-ResourceSet. NZP-CSI-RS-ResourceSet IE includes a set of Non-Zero-Power (NZP) CSI-RS resources and set-specific parameters.

[Table 7]

```
NZP-CSI-RS-ResourceSet ::= SEQUENCE {
nzp-CSI-ResourceSetId NZP-CSI-RS-ResourceSetId,
nzp-CSI-RS-Resources SEQUENCE (SIZE (1..maxNrofNZP-CSI-RS-ResourcesPerSet)) OF NZP-CSI-RS-
ResourceId,
repetition ENUMERATED { on, off } OPTIONAL, -- Need S
aperiodicTriggeringOffset INTEGER(0..6) OPTIONAL, -- Need S
trs-Info ENUMERATED {true} OPTIONAL, -- Need R
...,
[[
aperiodicTriggeringOffset-r16 INTEGER(0..31) OPTIONAL -- Need S
]]
}
```

Referring to Table 7, in the corresponding NZP-CSI-RS-ResourceSet IE, trs-info indicates that the antenna ports for all NZP-CSI-RS resources in the CSI-RS resource set are the same. For NZP-CSI-RS-ResourceSet configured with the higher layer parameter trs-Info, the UE shall assume that antenna ports with the same port index of the NZP-CSI-RS resource configured in the NZP-CSI-RS-ResourceSet are the same.

In relation to Table 7 above, Table 8 illustrates NZP-CSI-RS-Resource. NZP-CSI-RS-Resource IE is used to configure Non-Zero-Power (NZP) CSI-RS transmitted in the cell containing the IE that the UE may be configured to measure (e.g., 3GPP TS 38.214 clause 5.2 .2.3.1). Modification of the periodic, semi-persistent or aperiodic configurations for NZP-CSI-RS-Resource is not supported without release and add.

[Table 8]

```
NZP-CSI-RS-Resource ::= SEQUENCE {
 nzp-CSI-RS-ResourceId NZP-CSI-RS-ResourceId,
 resourceMapping CSI-RS-ResourceMapping,
 powerControlOffset INTEGER (-8..15),
 powerControlOffsetSS ENUMERATED{db-3, dbO, db3, db6} OPTIONAL, -- Need R
 scramblingID ScramblingId,
 periodicityAndOffset CSI-ResourcePeriodicityAndOffset OPTIONAL, -- Cond
 PeriodicOrSemi Persistent
 qcl-InfoPeriodicCSI-RS TCI-StateId OPTIONAL, -- Cond Periodic
 }
```

In relation to Table 8 above, Table 9 illustrates TCI-State. The TCI-State IE associates one or two DL RSs with the corresponding QCL type.

[Table 9]

```
TCI-State ::= SEQUENCE {
tci-StateId TCI-StateId,
qcl-Type1 QCL-Info,
qcl-Type2 QCL-Info OPTIONAL, -- Need R
... }
QCL-Info ::= SEQUENCE {
cell ServCellIndex OPTIONAL, -- Need R
bwp-Id BWP-Id OPTIONAL, -- Cond CSI-RS-Indicated
referenceSignal CHOICE {
csi-rs NZP-CSI-RS-ResourceId,
ssb SSB-Index
},
qcl-Type ENUMERATED {typeA, typeB, typeC, typeD},
}
```

In relation to Table 8 above, Table 10 illustrates CSI-RS-ResourceMapping. CSI-RS-ResourceMapping IE is used to configure resource element (RE) mapping of CSI-RS resources in the time and frequency domains.

[Table 10]

```
CSI-RS-ResourceMapping ::= SEQUENCE {
frequencyDomainAllocation CHOICE {
row1 BIT STRING (SIZE (4)),
row2 BIT STRING (SIZE (12)),
row4 BIT STRING (SIZE (3)),
other BIT STRING (SIZE (6))
},
nrofPorts ENUMERATED {p1,p2,p4,p8,p12,p16,p24,p32},
firstOFDMSymbolInTimeDomain INTEGER (0..13),
firstOFDMSymbolInTimeDomain2 INTEGER (2..12) OPTIONAL, -- Need R
cdm-Type ENUMERATED {noCDM, fd-CDM2, cdm4-FD2-TD2, cdm8-FD2-TD4},
density CHOICE {
dot5 ENUMERATED {evenPRBs, oddPRBs},
one NULL,
three NULL,
spare NULL
},
freqBand CSI-FrequencyOccupation,
}
```

## Method for configuring Tracking Reference Signal (TRS) in relation to quasi co-location (QCL) of group common transmission

- PUCCH: Physical Uplink Control channel
- PUSCH: Physical Uplink Shared Channel
- MCCH: Multicast Control Channel
- MTCH: Multicast Traffic Channel
- RRM: Radio resource management
- RLM: Radio link monitoring
- SCS: Sub-carrier spacing
- RLM: Radio link monitoring
- DCI: Downlink Control Information
- CAP: Channel Access Procedure
- Ucell: Unlicensed cell

- PCell: Primary Cell
- PSCell: Primary SCG Cell
- TBS: Transport Block Size
- TDRA: Time Domain Resource Allocation
- SLIV: Starting and Length Indicator Value (An indication value for a starting symbol index and the number of symbols in a slot of a PDSCH and/or a PUSCH. It may be configured as a component of an entry constituting a TDRA field in a PDCCH that schedules a corresponding PDSCH and/or PUSCH.)

BWP: Bandwidth Part (It may be composed of continuous resource blocks (RBs) on a frequency axis. It may correspond to one numerology (e.g., SCS, CP length, slot/mini-slot duration, etc.). In addition, a plurality of BWPs may be configured in one carrier (the number of BWPs per carrier may also be limited), but the number of activated BWPs may be limited to a part (e.g., one) per carrier.)

- CORESET: control resource set (CONtrol REsourse SET) (It means a time-frequency resource region in which a PDCCH can be transmitted, and the number of CORESETs per BWP may be limited.)
- REG: Resource element group
- SFI: Slot Format Indicator (An indicator indicating a symbol level DL/UL direction within a specific slot(s), transmitted through a group common PDCCH).
- COT: Channel occupancy time
- SPS: Semi-persistent scheduling
- QCL: Quasi-Co-Location (A QCL relationship between two reference signals (RS) may mean that a QCL parameter obtained from one RS such as a Doppler shift, a Doppler spread, an average delay, a delay spread, a spatial Rx parameter, etc. can also be applied to another RS (or antenna port(s) of a corresponding RS). In the NR system, 4 QCL types are defined as follows. 'typeA': {Doppler shift, Doppler spread, average delay, delay spread}, 'typeB': {Doppler shift, Doppler spread}, 'typeC': {Doppler shift, average delay}, 'typeD': {Spatial Rx parameter}. For certain DL RS antenna port(s), a first DL RS may be configured as a reference for QCL type X (X=A, B, C, or D), and a second DL RS may be configured as a reference for QCL type Y (Y=A, B, C, or D, but X≠Y).)

TCI: Transmission Configuration Indication (One TCI state includes a QCL relationship between DM-RS ports of a PDSCH, DM-RS ports of a PDCCH, or CSI-RS port(s) of a CSI-RS resource and one or more DL RSs. For 'Transmission Configuration Indication' among fields in DCI that schedules a PDSCH, a TCI state index corresponding to each code point constituting the field is activated by a MAC control element (CE), and a TCI state configuration for each TCI state index is configured through RRC signaling. In the Rel-16 NR system, a corresponding TCI state is configured between DL RSs, but a configuration between a DL RS and a UL RS or between a UL RS and a UL RS may be allowed in a future release. Examples of a UL RS include an SRS, a PUSCH DM-RS, and a PUCCH DM-RS.)

- SRI: SRS resource indicator (It indicates one of SRS resource index values configured in 'SRS resource indicator' among fields in DCI scheduling a PUSCH. When transmitting a PUSCH, a UE may transmit the PUSCH using the same spatial domain transmission filter used for transmission and reception of a reference signal associated with the corresponding SRS resource. Here, a reference RS is configured by RRC signaling through an SRS spatial relation information parameter (SRS-SpatialRelationInfo) for each SRS resource, and an SS/PBCH block, a CSI-RS, or an SRS may be configured as the reference RS.)
- TRP: Transmission and Reception Point
- PLMN ID: Public Land Mobile Network identifier
- RACH: Random Access Channel
- RAR: Random Access Response
- Msg3: This is a message transmitted through an uplink shared channel (UL-SCH) including a C-RNTI MAC CE or a common control channel (CCCH) service data unit (SDU), provided from a higher layer, and associated with a UE Contention Resolution Identity as part of a random access procedure.
- Special Cell: In case of a dual connectivity operation, the term special cell refers to the PCell of a master cell group (MCG) or the PSCell of a secondary cell group (SCG) depending on whether a MAC entity is related to the MCG or the SCG, respectively. Otherwise, the term Special Cell refers to the PCell. The Special Cell supports PUCCH transmission and contention-based random access and is always active.
- Serving Cell: It includes the PCell, the PSCell, and the secondary cell (SCell).
- CG: Configured Grant
- Type 1 CG or Type 2 CG: Type 1 configured grant or Type 2 configured grant
- Fall-back DCI: It indicates a DCI format that can be used for a fall-back operation, and for example, corresponds to DCI formats 0_0 and 1_0.

- non-fall-back DCI: It indicates a DCI format other than the fall-back DCI, for example, corresponds to DCI formats 0_1 and 1_1.
- SS: search space
- FDRA: frequency domain resource allocation
- TDRA: time domain resource allocation
- LP, HP: Low(er) priority, High(er) priority
- A/N for cell A: A/N (acknowledgement/negative acknowledgment) information for data (e.g., PDSCH) received in cell A
- UL CI: Uplink cancelation indication
- CFR: Common frequency resource for multicast and broadcast service (MBS). One DL CFR provides group common PDCCH and group common PDSCH transmission resources for MBS transmission and reception. One UL CFR provides HARQ-ACK PUCCH resources for group common PDSCH reception. One CFR is one MBS specific BWP or one UE specific BWP. Alternatively, one or a plurality of CFRs may be configured in one UE specific BWP. One CFR is associated with one UE specific BWP.
- TMGI: Temporary Mobile Group Identity. As an MBS service identifier, it indicates a specific service.
- G-RNTI: Group Radio Network Temporary Identifier. It indicates a UE group identifier that receives an MBS.

The above contents (3GPP system, frame structure, NR system, etc.) can be applied in combination with methods proposed in the present disclosure to be described later, or it may be supplemented to clarify the technical characteristics of the methods proposed in the present disclosure. In this disclosure, '/' means 'and', 'or', or 'and/or' depending on the context.

In the prior art, a base station may configure a UE-specific SPS configuration for a specific UE and allocate a repeated downlink SPS transmission resource according to a configured period. Here, DCI of a UE-specific PDCCH may indicate activation (SPS activation) of a specific SPS configuration index, and accordingly, the corresponding UE can repeatedly receive an SPS transmission resource according to a configured period. This SPS transmission resource is used for initial HARQ (hybrid automatic repeat request) transmission, and a base station may allocate a retransmission resource of a specific SPS configuration index through DCI of a UE-specific PDCCH. For example, when a UE reports a HARQ NACK for an SPS transmission resource, a base station can allocate a retransmission resource to DCI so that a UE can receive downlink retransmission. In addition, DCI of a UE-specific PDCCH may indicate deactivation (SPS release or SPS deactivation) of a specific SPS configuration index, and a UE receiving this does not receive the indicated SPS transmission resource. Here, a cyclic redundancy check (CRC) of DCI for activation/retransmission/deactivation of the SPS is scrambled with Configured Scheduling-RNTI (CS-RNTI).

Rel-17 NR intends to introduce a DL broadcast or DL multicast transmission method to support a Multicast Broadcast Service (MBS) service similar to LTE MBMS. A base station provides a point-to-multipoint (PTM) transmission method and/or a point-to-point (PTP) transmission method for DL broadcast or DL multicast transmission.

In a PTM transmission method for an MBS, a base station may configure a common frequency resource (CFR). The base station transmits a group common PDCCH and a group common PDSCH to a plurality of UEs through the corresponding CFR, and a plurality of UEs simultaneously receive the same group common PDCCH and group common PDSCH transmission to decode the same MBS data.

On the other hand, in a PTP transmission scheme for an MBS, a base station transmits a UE-specific PDCCH and a UE-specific PDSCH to a specific UE, and only the corresponding UE receives the UE-specific PDCCH and the UE-specific PDSCH. Here, when there are a plurality of UEs receiving the same MBS service, a base station separately transmits the same MBS data to individual UEs through different UE-specific PDCCHs and UE-specific PDSCHs. That is, the same MBS data is provided to a plurality of UE, but different channels (i.e., PDCCH, PDCCH) are used for each UE.

As described above, in a PTM transmission method, a base station transmits a plurality of group common PDSCHs to a plurality of UEs. Here, a base station can receive UE's HARQ-ACKs for a group common PDSCH through a UE-specific PUCCH resource from a plurality of UEs.

Here, when a transport block (TB) for a multicast PDSCH (or group common PDSCH) is successfully decoded, a UE transmits an ACK as HARQ-ACK information. On the other hand, if a transport block (TB) is not successfully decoded, a UE transmits a NACK as HARQ-ACK information. This HARQ-ACK transmission method is referred to as an ACK/NACK based HARQ-ACK method (mode). In general, a UE may transmit an ACK/NACK based HARQ-ACK using a UE-specific PUCCH resource.

On the other hand, when a NACK only based HARQ-ACK method (mode) is configured for a multicast PDSCH (or group common PDSCH), a UE does not perform PUCCH transmission in case of an ACK and a UE perform PUCCH transmission in case of a NACK. Here, a PUCCH is a group common PUCCH resource, and only NACK can be transmitted as HARQ-ACK information.

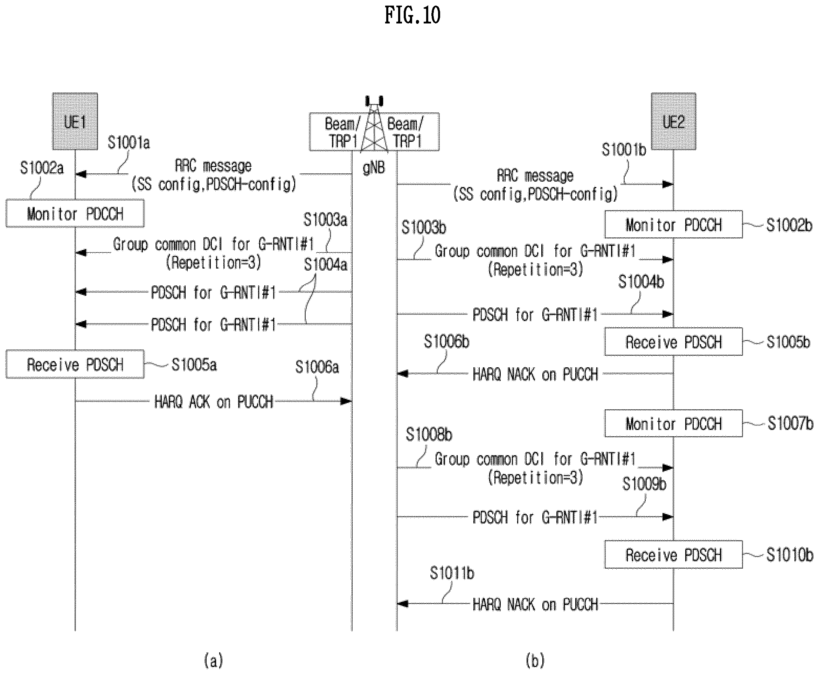

FIG. 10 illustrates a HARQ-ACK transmission and reception procedure for a multicast PDSCH according to an embodiment of the present disclosure.

FIG. 10(a) illustrates a signaling procedure between UE1 and a base station (gNB) (beam/TRP 1), and FIG. 10(b) illustrates a signaling procedure between UE2 and a base station (gNB) (beam/TRP 2). In addition, FIG. 10(a) illustrates a case without PDSCH retransmission, and FIG. 10(b) illustrates a case with PDSCH retransmission. In FIG. 10, for convenience of description, two procedures are illustrated together, but the present disclosure is not limited thereto. That is, UE1 and UE2 are not limited to accessing the same base station (through different beams/TRPs), and are not limited to performing the two procedures together. In other words, although FIGS. 10(a) and 10(b) are separate procedures, they are shown together for convenience of explanation, and common descriptions are described for common steps.

1. Although not shown in FIG. 10, (before the procedure of FIG. 10), a UE may enter an RRC connected mode (RRC_CONNECTED mode) and may transmit a messages/information that indicates one or more MBS services of interest to a base station.

A. The message/information may be transmitted through any one of uplink control information (UCI), a MAC control element (CE), and an RRC message.
B. An interested MBS service in the message/information may mean either TMGI or G-RNTI included in a DL message received from a base station.

For example, the DL message may be a service availability message including TMGI#1, TMGI#3, TMGI#5 and TMGI#10. If a UE is interested in TMGI#5, the UE may indicate an order of TMGI#5 in the message/information. That is, the UE may report '3' to the base station.
As another example, the DL message may be a service availability message including G-RNTI#1, G-RNTI#3, G-RNTI#5 and G-RNTI#10. If a UE is interested in G-RNTI#10, the UE may indicate an order of G-RNTI#10 in the message/information. That is, the UE may report '4' to the base station.
2. Upon receiving the message/information, a base station may transmit at least one of i) a common frequency resource (CFR) configuration, ii) one or more group common PDSCH configurations including TCI states for one or more G-RNTI value(s), iii) a search space (SS) configuration including TCI states for one or more G-RNTI value(s) to the UE through an RRC message (S1001a, S1001b).
Although one RRC message is illustrated in FIG. 10, it is not limited thereto, and the configurations i) to iii) may be provided to a UE through different (or partially identical) RRC messages.
Upon receiving an RRC message from a base station, a UE may configure one or more group common PDSCH (e.g., group common SPS PDSCH) configurations according to the RRC message.

A. An RRC message may be a group common message transmitted on a PTM multicast control channel (MCCH) or a UE-specific message transmitted on a UE-specific dedicated control channel (DCCH).
B. A UE may be configured with at least a G-RNTI value for each MBS CFR or each serving cell. Alternatively, in addition to this, a GC-CS-RNTI (group common-configured scheduling-RNTI) may also be configured, and may be used for activating, retransmitting, or releasing one or more group common SPS configurations.

- if a UE has not configured with a GC-CS-RNTI for a CFR or a serving cell, when a CS-RNTI has been configured for the CFR or the serving cell, the UE may use the CS-RNTI to activate, retransmit or release one or more group common SPS configurations.
- A base station may associate a list of TMGIs or a list of G-RNTIs with one GC-CS-RNTI. In this case, a base station may provide a UE with a list of TMGIs or a list of G-RNTIs associated with the GC-CS-RNTI value.

C. Each PDSCH configuration (e.g., RRC parameter PDSCH-config) may include at least information elements (IE) for multicast and/or broadcast as shown in Table 11 below.

Table 11 illustrates the PDSCH-Config IE used to configure PDSCH parameters.

【Table 11】

```
PDSCH-Config ::= SEQUENCE {
    dataScramblingIdentityPDSCH INTEGER (0..1023) OPTIONAL, -- Need S
    dmrs-DownlinkForPDSCH-MappingTypeA SetupRelease { DMRS-DownlinkConfig } OPTIONAL, --
    Need M
    dmrs-DownlinkForPDSCH-MappingTypeB SetupRelease { DMRS-DownlinkConfig } OPTIONAL, --
    Need M
    tci-StatesToAddModList SEQUENCE (SIZE(1..maxNrofTCI-States)) OF TCI-State OPTIONAL, --
    Need N
    tci-StatesToReleaseList SEQUENCE (SIZE(1..maxNrofTCI-States)) OF TCI-StateId OPTIONAL,
    -- Need N
    vrb-ToPRB-Interleaver ENUMERATED {n2, n4} OPTIONAL, -- Need S
    resourceAllocation ENUMERATED { resourceAllocationType0, resourceAllocationType1,
    dynamicSwitch},
    pdsch-TimeDomainAllocationList SetupRelease { PDSCH-TimeDomainResourceAllocationList }
    OPTIONAL, -- Need M
    pdsch-AggregationFactor ENUMERATED { n2, n4, n8 } OPTIONAL, -- Need S
    rateMatchPatternToAddModList SEQUENCE (SIZE (1..maxNrofRateMatchPatterns)) OF
    RateMatchPattern OPTIONAL, -- Need N
    rateMatchPatternToReleaseList SEQUENCE (SIZE (1..maxNrofRateMatchPatterns)) OF
    RateMatchPatternId OPTIONAL, -- Need N
    rateMatchPatternGroup1 RateMatchPatternGroup OPTIONAL, -- Need R
    rateMatchPatternGroup2 RateMatchPatternGroup OPTIONAL, -- Need R
    rbg-Size ENUMERATED {config1, config2},
    mcs-Table ENUMERATED {qam256, qam64LowSE} OPTIONAL, -- Need S
    maxNrofCodeWordsScheduledByDCI ENUMERATED {n1, n2}
    ...
}
```

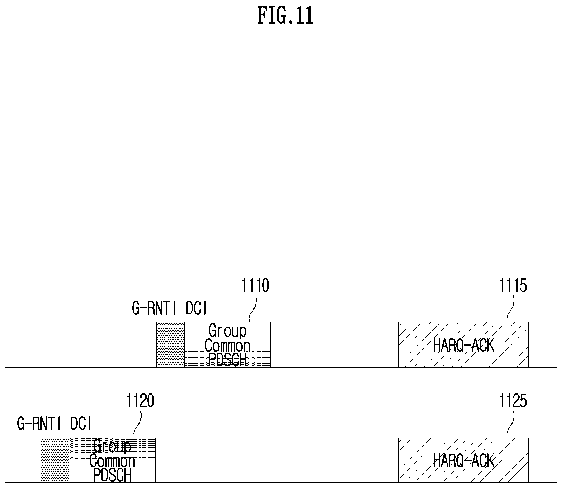

Table 12 illustrates a description of the fields of the PDSCH-config of FIG. 11 above.

[Table 12]

| PDSCH-Config field descriptions |
|---|
| dataScramblingIdentityPDSCH, dataScramblingIdentityPDSCH2 Identifier(s) used to initialize data scrambling (c_init) for PDSCH. The dataScramblingIdentityPDSCH2 is configured if coresetPoolIndex is configured with 1 for at least one CORESET in the same BWP. |
| dmrs-DownlinkForPDSCH-MappingTypeA, dmrs-DownlinkForPDSCH-MappingTypeA-DCI-1-2 DMRS configuration for PDSCH transmissions using PDSCH mapping type A (chosen dynamically via PDSCH-TimeDomainResourceAllocation). Only the fields dmrs-Type, dmrs-AdditionalPosition and maxLength may be set differently for mapping type A and B. The field dmrs-DownlinkForPDSCH-MappingTypeA applies to DCI format 1_1 and the field dmrs-DownlinkForPDSCH-MappingTypeA-DCI-1-2 applies to DCI format 1 2. |
| dmrs-DownlinkForPDSCH-MappingTypeB, dmrs-DownlinkForPDSCH-MappingTypeB-DCI-1-2 DMRS configuration for PDSCH transmissions using PDSCH mapping type B (chosen dynamically via PDSCH-TimeDomainResourceAllocation). Only the fields dmrs-Type, dmrs-AdditionalPosition and maxLength may be set differently for mapping type A and B. The field dmrs-DownlinkForPDSCH-MappingTypeB applies to DCI format 1_1 and the field dmrs-DownlinkForPDSCH-MappingTypeB-DCI-1-2 applies to DCI format 1 2. |
| maxNrofCodeWordsScheduledByDCI Maximum number of code words that a single DCI may schedule. This changes the number of MCS/RV/NDI bits in the DCI message from 1 to 2. |
| mcs-Table, mcs-TableDCI-1-2 Indicates which MCS table the UE shall use for PDSCH. If the field is absent the UE applies the value 64QAM. The field mcs-Table applies to DCI format 1_0 and DCI format 1_1, and the field mcs-TableDCI-1-2 applies to DCI format 1_2. |
| pdsch-AggregationFactor Number of repetitions for data. When the field is absent the UE applies the value 1. |
| pdsch-TimeDomainAllocationList, pdsch-TimeDomainAllocationListDCI-1-2 List of time-domain configurations for timing of DL assignment to DL data. |

(continued)

| |
|---|
| The field pdsch-TimeDomainAllocationList (with or without suffix) applies to DCI format 1_0 and DCI format 1_1, and if the field pdsch-TimeDomainAllocationListDCI-1-2 is not configured, to DCI format 1_2. If the field pdsch-TimeDomainAllocationListDCI-1-2 is configured, it applies to DCI format 1_2. The network does not configure the pdsch-TimeDomainAllocationList-r16 simultaneously with the pdsch-TimeDomainAllocationList (without suffix) in the same PDSCH-Config. |
| rateMatchPatternGroup1, rateMatchPatternGroup1DCI-1-2 <br> The IDs of a first group of RateMatchPatterns defined in PDSCH-Config->rateMatchPatternToAddModList (BWP level) or in ServingCellConfig ->rateMatchPatternToAddModList (cell level). These patterns can be activated dynamically by DCI. <br> The field rateMatchPatternGroup1 applies to DCI format 1_1, and the field rateMatchPatternGroup1DCI-1-2 applies to DCI format 1 2. |
| rateMatchPatternGroup2, rateMatchPatternGroup2DCI-1-2 <br> The IDs of a second group of RateMatchPatterns defined in PDSCH-Config->rateMatchPatternToAddModList (BWP level) or in ServingCellConfig ->rateMatchPatternToAddModList (cell level). These patterns can be activated dynamically by DCI. <br> The field rateMatchPatternGroup2 applies to DCI format 1_1, and the field rateMatchPatternGroup2DCI-1-2 applies to DCI format 1 2. |
| rateMatchPatternToAddModList <br> Resources patterns which the UE should rate match PDSCH around. The UE rate matches around the union of all resources indicated in the rate match patterns. |
| rbg-Size <br> Selection between config 1 and config 2 for RBG size for PDSCH. The UE ignores this field if resourceAllocation is set to resourceAllocationType1. |
| resourceAllocation, resourceAllocationDCI-1-2 <br> Configuration of resource allocation type 0 and resource allocation type 1 for non-fallback DCI. The field resourceAllocation applies to DCI format 1_1, and the field resourceAllocationDCI-1-2 applies to DCI format 1 2. |
| resourceAllocationType1GranularityDCI-1-2 <br> Configure the scheduling granularity applicable for both the starting point and length indication for resource allocation type 1 in DCI format 1_2. If this field is absent, the granularity is 1 PRB. |
| tci-StatesToAddModList <br> A list of Transmission Configuration Indicator (TCI) states indicating a transmission configuration which includes QCL-relationships between the DL RSs in one RS set and the PDSCH DMRS ports. |
| vrb-ToPRB-Interleaver, vrb-ToPRB-InterleaverDCI-1-2 <br> Interleaving unit configurable between 2 and 4 PRBs. When the field is absent, the UE performs non-interleaved VRB-to-PRB mapping. |

3. When a search space (SS) for a configured CFR is configured, a UE monitors a PDCCH on the SS configured in the CFR configured to receive DCI with a CRC scrambled with a G-RNTI or a G-CS-RNTI (S1002a, S1002b).

4. If a data unit is available in a Multicast Traffic Channel (MTCH) of an MBS radio bearer (MRB) for an MBS service, according to a service-to-resource mapping, a base station constructs and transmits a transport block (TB) including a data unit for an SPS PDSsCH occasion, i) associated with an MTCH of an MRB for an MBS service, ii) associated with a TMGI of an MBS service, iii) associated with a short ID of an MBS service, or iv) associated with a G-RNTI mapped to an MBS service.

In the case of group common dynamic scheduling of a TB, a base station transmits DCI to a UE on a PDCCH (S1003a, S1003b) .

Here, a CRC of the DCI may be scrambled by a G-RNTI, a G-CS-RNTI or a CS-RNTI. Also, a PDCCH may be a group common PDCCH or a UE specific PDCCH.

In FIG. 10, a case in which a group common DCI with a CRC scrambled with G-RNTI#1 is transmitted, and repetition = 3 is exemplified.

The DCI may include the following information (fields) .

- Identifier for DCI format: This information (field) may indicate either an MBS-specific DCI format or one of an existing DCI format for an MBS.
- Carrier indicator: This information (field) indicates a (serving or MBS specific) cell of a CFR through which a group common PDCCH/PDSCH is transmitted or a serving cell of an active BWP of a UE associated with the CFR.
- Bandwidth part indicator: This information (field) indicates a BWP ID assigned to a CFR through which a group common PDCCH/PDSCH is transmitted or a BWP ID of an active BWP of a UE associated with the CFR.

In addition, the DCI may include information on a frequency domain resource assignment, a time domain resource assignment, a VRB-to-PRB mapping, and a PRB bundling size indicator, a rate matching indicator, a ZP CSI-RS trigger, a modulation and coding scheme, a new data indicator (NDI), a redundancy version, a HARQ process number, a downlink assignment index, a transmit power control (TPC) command for a scheduled PUCCH, a PUCCH resource Indicator (PRI), a PDSCH-to-HARQ_feedback timing indicator (PDSCH-to-HARQ_feedback timing indicator), antenna port(s), a transmission configuration indication (TCI), an SRS request, a DMRS sequence initialization, and a priority indicator.

In the case of group common dynamic scheduling, a base station may provide a UE with one or more of the following service-to-resource mappings for an MBS service identified by a TMGI or a G-RNTI or a GC-CS-RNTI i) by a group common or UE-specific RRC message or ii) by a group common or UE-specific MAC CE. Data of an MBS service can be carried over an MBS radio bearer (MRB) of an MTCH associated with an MBS service, which is a multicast traffic logical channel. An RRC message may be a group common message transmitted through a PTM Multicast Control Channel (MCCH) or a UE-specific message transmitted through a UE-specific Dedicated Control Channel (DCCH). DCI scheduling a PDSCH carrying MBS service data may also indicate one or more of a short ID, an MTCH ID, an MRB ID, a G-RNTI value, and a TMGI value for an MBS service.

5. If a UE receives DCI with a CRC scrambled by a G-RNTI of interest in receiving, based on i) a mapping between MBS services and a HARQ process number (HPN) indicated in DCI and/or ii) (if available) a mapping between MBS services and an indicated short ID(s) in DCI, a UE may determine an MBS service related to one or more of short ID, MTCH ID, MRB ID, G-RNTI value, and TMGI value for each PDSCH occasion.

A base station may transmit a PDSCH carrying corresponding MBS service data to a UE (S1004a, S1004b) (In FIG. 10, the case where MBS service data mapped with G-RNTI#1 is transmitted is exemplified), and if a UE is interested in the determined MBS service(s), the UE can receive PDSCH transmission scheduled by DCI (S1005a, S1005b).

On the other hand, different from the example of FIG. 10, if a UE is not interested in the determined MBS service(s), the UE may not receive PDSCH transmission scheduled by DCI.

Then, according to the decoding state of PDSCH transmission, a UE transmits HARQ feedback to a base station.

6. A UE receiving group common DCI indicating PUCCH resource(s) for an MBS HARQ-ACK may transmit a HARQ-ACK to a base station through a PUCCH after receiving a PDSCH scheduled by DCI as follows (S1006a).

A. In the case of PTM method 1, group common DCI may indicate a single PUCCH resource indicator (PRI) and a single PDSCH-to-HARQ_feedback timing indicator (K1) for at least an ACK/NACK based HARQ-ACK.

B. In case of UE-specific PUCCH resource allocation for an ACK/NACK based HARQ-ACK for group common DCI, different UEs in a group can be configured with different values of at least of a PUCCH resource and a candidate DL data-UL ACK (e.g., dl-DataToUL-ACK) in a UE-dedicated PUCCH configuration (e.g., PUCCH-config) for multicast or unicast (if PUCCH-config for multicast is not configured).

Different PUCCH resources may be allocated to different UEs by the same PUCCH resource indicator (PRI) and the same PDSCH-to-HARQ_feedback timing indicator (K1) of group common DCI.

C. In case of PTP retransmission, in UE-specific DCI, a PUCCH resource indicator (PRI) and a PDSCH-to-HARQ_feedback timing indicator (K1) can be interpreted based on a PUCCH configuration (e.g. PUCCH-config) for unicast regardless of whether or not a PUCCH configuration (e.g. PUCCH-config) for multicast is configured.

D. A PUCCH Resource Indicator (PRI) may be indicated by group common DCI as follows.

1) Option 1A-1: A list of UE specific PRIs may be included in DCI.

- Each PRI in a list may indicate an entry corresponding to a candidate PUCCH resource ID (e.g., pucch-ResourceId) value in a PUCCH configuration (e.g. PUCCH-config) for the same PUCCH resource or different PUCCH resource allocation for other UEs of a group receiving the same DCI. Other PRIs of DCI may indicate different entries in a PUCCH configuration (e.g., PUCCH-config).
- A candidate PUCCH resource ID (e.g., pucch-ResourceId) value is configured by a higher layer (e.g., RRC), at least in multicast PUCCH configuration (e.g., PUCCH-config), different PUCCH resource ID (e.g., pucch-ResourceId) values may be configured for different UEs of the same group.

2) Option 1A-2: group common PRI may be included in DCI.

- A single group common PRI may indicate a corresponding entry for a candidate PUCCH resource ID (e.g., pucch-ResourceId) value in a UE specific PUCCH configuration (e.g., PUCCH-config) for the same or different PUCCH resource allocation for all UEs in a group.
- A candidate PUCCH resource ID (e.g., pucch-ResourceId) value is configured by a higher layer (e.g., RRC), at least in PUCCH configuration for multicast (e.g., PUCCH-config), different PUCCH resource ID (e.g., pucch-ResourceId) values may be configured for different UEs of the same group.
- When a PUCCH configuration (e.g., PUCCH-config) for multicast is configured for a HARQ-ACK for a group common PDSCH scheduled by group common DCI, a UE may assume that a PRI of group common DCI indicates a corresponding entry for a candidate PUCCH resource ID (pucch-ResourceId) value in a PUCCH configuration (e.g., PUCCH-config) for multicast. That is, a PRI value of group common DCI may be interpreted based on a PUCCH configuration (e.g., PUCCH-config) for multicast.
- On the other hand, when a PUCCH configuration for multicast (e.g., PUCCH-config) is not configured for a HARQ-ACK for a group common PDSCH scheduled by group common DCI, a UE may assume that a PRI of group common DCI indicates a corresponding entry for a candidate PUCCH resource ID (pucch-ResourceId) value in a PUCCH configuration (e.g., PUCCH-config) for unicast. That is, a PRI value of group common DCI may be interpreted based on a PUCCH configuration (e.g., PUCCH-config) for unicast.

E. K1 (PDSCH-to-HARQ_feedback timing indicator) may be indicated by group common DCI as follows.

1) Option 1B-1: A list of UE specific K1 values may be included in DCI.

- Each K1 in a list may indicate the same UL slot or different UL (sub)slots for other UEs in a group.

As an example, different K1 values may be assigned to different UEs. For example, K1-UE1, K2-UE2, K3-UE3, ...

As another example, a K1 value may be shared by multiple UEs (e.g., K1-UE1/UE2, K2-UE3/UE4).

As another example, one K1 value may be a reference and other K1 values may be assigned based on the reference. For example, a list of {K1_ref, K1_offset (offset from reference)} may be indicated in DCI.

For example, UE1 may use K1_ref, UE2 may use K1_ref + K1_offest1, and UE3 may use K1_ref + K1_offest2.

2) Option 1B-2: A group common K1 value may be included in DCI.

- A single K1 value may indicate a corresponding entry for a candidate DL data-UL ACK value (e.g., dl-DataToUL-ACK) in a UE specific PUCCH configuration (e.g., PUCCH-config) for the same or different PUCCH resource allocation for all UEs of a group receiving DCI. This can be applied when a DCI format of DCI is configured in a UE specific PUCCH configuration (e.g., PUCCH-config) for a K1 value.
- A candidate DL data-UL ACK value (e.g., dl-DataToUL-ACK) is configured by a higher layer (e.g., RRC), at least the PUCCH configuration for multicast (e.g., PUCCH-config) can be different for different UEs in the same group.
- When a PUCCH configuration (e.g., PUCCH-config) for multicast is configured for a HARQ-ACK for a group common PDSCH scheduled by group common DCI, a UE may assume that a K1 value of group common DCI indicates a corresponding entry for a candidate DL data-UL ACK value (e.g., dl-DataToUL-ACK) in a PUCCH configuration (e.g., PUCCH-config) for multicast. That is, a K1 value of group common DCI may be interpreted based on a PUCCH configuration (e.g., PUCCH-config) for multicast.
- On the other hand, when a PUCCH configuration for multicast (e.g., PUCCH-config) is not configured for a HARQ-ACK for a group common PDSCH scheduled by group common DCI, a UE may assume that a K1 value of group common DCI indicates a corresponding entry for a candidate DL data-UL ACK value (e.g., dl-DataToUL-ACK) in a PUCCH configuration (e.g., PUCCH-config) for unicast. That is, a K1 value of group common DCI may be interpreted based on a PUCCH configuration (e.g., PUCCH-config) for unicast.

In addition, when receiving group common DCI with a CRC scrambled by a G-RNTI and/or UE specific DCI with a CRC scrambled by a C-RNTI, when a Type-1 HARQ-ACK codebook for a PUCCH-config for multicast and/or PUCCH-config for unicast is configured, a UE may configure Time Domain Resource Allocation (TDRA) to generate a type 1 HARQ-ACK codebook for HARQ-ACK(s) for a group common PDSCH scheduled by group common DCI and/or a UE specific PDSCH scheduled by UE specific DCI.

7. If decoding of a TB on a PDSCH transmission occasion fails, a UE may transmit a HARQ NACK to a base station on a PUCCH resources in a configured UL CFR (S1006b).

By using a PUCCH resource, a UE may also transmit a HARQ-ACK for other PDSCH transmissions such as a unicast SPS PDSCH, a dynamic unicast PDSCH, PTP retransmission, and/or a dynamic group common PDSCH. In this case, to multiplex a HARQ-ACK on a PUCCH in a (sub)slot for an SPS PDSCH for multicast, an SPS PDSCH for unicast, a dynamically scheduled multicast PDSCH, and/or a dynamically scheduled unicast PDSCH, a UE may construct a codebook based on one or more options in step 7 above.

If a reference signal received power (RSRP) threshold is configured, a UE may use a NACK only based HARQ-ACK based on a measured RSRP of a serving cell. For example, if the measured RSRP is higher than (or equal to or higher than) the threshold value, a NACK only based HARQ-ACK may be transmitted through a group common PUCCH resource indicated by a PRI of DCI. On the other hand, if the measured RSRP is lower than (or equal to or less than) the threshold, a NACK only based HARQ-ACK may be changed to a HARQ-ACK based HARQ-ACK and transmitted through a UE-specific PUCCH resource indicated by a PRI of DCI.

Meanwhile, if a PDSCH aggregation factor (pdsch-AggregationFactor) is configured for a G-RNTI or a base station indicates a repetition number (repeat_number) in DCI, a TB scheduled by group common DCI may be repeated for the Nth HARQ transmission of a TB within each symbol allocation among each PDSCH aggregation factor (pdsch-AggregationFactor) consecutive slots or among each repetition number (repeat_number) consecutive slots.

8. A base station receiving a HARQ NACK with a TCI state may retransmit a PDCCH and a PDSCH with a TCI state in a DL CFR configured for TB retransmission. A UE may monitor a group common and/or UE-specific PDCCH with a TCI state on a search space configured in a DL CFR to receive TB retransmission (S1007b).

A base station may retransmit a TB to only one of UEs in a group by a UE-specific PDCCH, and other UEs may not receive retransmission of a TB (e.g., because the other UEs successfully received the TB).

9. When a UE receives a PDCCH for retransmission of a TB (S1008b), a UE may receive a PDSCH scheduled by DCI of a PDCCH (S1009b, S1010b).

If a UE successfully decodes a TB on a PDSCH, based on a mapping between an MBS service indicated by DCI and an HPN (HARQ process number) and/or between an MBS service indicated by DCI and a short ID(s) (if available), the UE may consider that the decoded TB is associated with an MTCH, an MRB, a TMGI, a G-RNTI and/or a short ID of an MBS service.

10. If decoding of a TB succeeds in a PDSCH transmission occasion, a UE may transmit a HARQ ACK to a base station through a PUCCH resource in a UL CFR configured according to step 7. On the other hand, if decoding of a TB on a PDSCH transmission occasion fails, a UE may transmit a HARQ NACK to a base station on a PUCCH resource in a configured UL CFR (S1011b).

By using a PUCCH resource, a UE may also transmit HARQ-ACKs for other PDSCH transmissions such as a unicast SPS PDSCH, a dynamic unicast PDSCH, PTP retransmission, and/or a dynamic group common PDSCH. In this case, to multiplex HARQ-ACKs on a PUCCH in a (sub)slot for an SPS PDSCH for multicast, an SPS PDSCH for unicast, a dynamically scheduled multicast PDSCH, and/or a dynamically scheduled unicast PDSCH, a UE may construct a codebook based on one or more options in step 7 above.

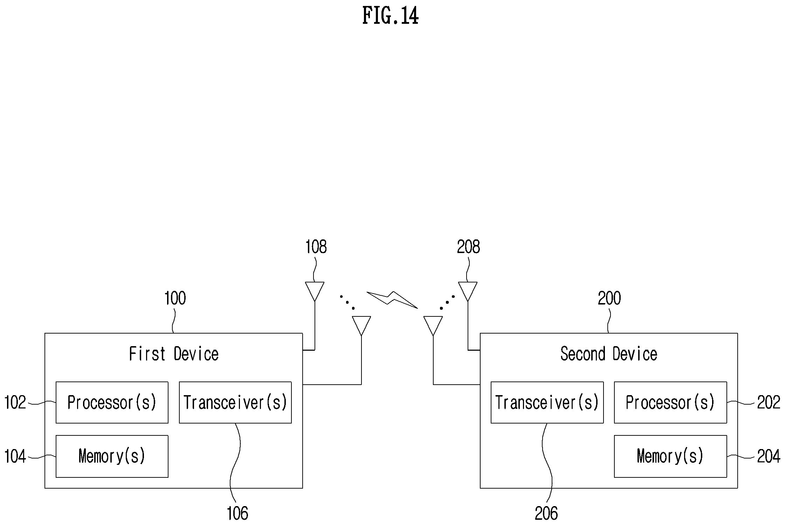

Meanwhile, an example of FIG. 10 is for convenience of description and does not limit the scope of the present disclosure. Some step(s) illustrated in FIG. 10 may be omitted depending on circumstances and/or settings. In addition, a base station and a UE in FIG. 10 are just one example, and may be implemented as the device illustrated in FIG. 14 below. For example, the processor (102/202) of FIG. 14 can control to transmit and receive channels/signals/data/information, etc. using the transceiver (106/206) and can also control to store transmitted or received channels/signals/information/data/information, etc. in the memory (104/204).

A base station may be a general term for an object that transmits and receives data with a terminal. For example, a base station may be a concept including one or more transmission points (TPs), one or more transmission and reception points (TRPs), etc. Also, a TP and/or a TRP may include a panel of a base station, a transmission and reception unit, etc. In addition, "TRP" may be replaced with expressions such as a panel, an antenna array, a cell (e.g., macro cell / small cell / pico cell, etc.) / a TP (transmission point), base station (base station, gNB, etc.), etc. As described above, TRPs may be classified according to information (e.g., index, ID) on a CORESET group (or CORESET pool). For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

Referring to FIG. 10, signaling between one base station and a UE is considered for convenience of explanation, but the corresponding signaling scheme can be extended and applied to signaling between multiple TRPs and multiple UEs. Alternatively, a base station may include a plurality of TRPs, or may be one cell including a plurality of TRPs.

The base station may broadcast a group common PDCCH and a group common PDSCH, through single frequency network (SFN) transmission, where multiple cells and/or TRPs are synchronized and perform the same transmission.

Here, a group common PDCCH may refer to a PDCCH transmitted according to a group common scheme considering the UE group, and a group common PDSCH may refer to a PDSCH transmitted according to a group common scheme considering the UE group. Hereinafter, for convenience of explanation, in the present disclosure, the group common PDCCH is referred to as group common (GC)-PDCCH, and the group common PDSCH is referred to as GC-PDSCH.

At this time, when the UE receives GC-PDCCH/GC-PDSCH from multiple cells, there is a problem that the SSB of the serving cell may not be used as a QCL source for multicell-based SFN transmission, due to different delay spreads.

Here, the QCL source may refer to a RS (e.g., SSB/CSI-RS for DL, SRS for UL, etc.) that the UE refers to to apply QCL property when transmitting and receiving signals with a base station, etc.

As an example, when the broadcast GC-PDCCH/GC-PDSCH refers to SSB as a QCL source, since the delay spread of the SSB of the serving cell is different from the delay spread of multi-cell SFN transmission, the delay spread of the SSB of the serving cell is not accurate for channel estimation. Therefore, TRS needs to be provided separately for SFN transmission for GC-PDCCH and/or GC-PDSCH. However, in the case of the conventional NR wireless communication system, TRS is not configured for the UE in idle mode or inactive mode, so a problem may occur where the reception performance of a UE attempting to receive SFN-based broadcast transmission is degraded.

Therefore, considering the above-mentioned problems, the present disclosure proposes a GC-PDCCH and/or GC-PDSCH reception method that provides TRS as a QCL source.

FIG. 11 illustrates group common transmission and HARQ-ACK reporting therefor in a wireless communication system to which the the present disclosure may be applied.

Referring to FIG. 11, the UE may receive GC-PDCCH/GC-PDSCHs (1110, 1120) scheduled by different G-RNTIs based on the FDM method or the TDM method. The base station may configure a common frequency resource (CFR), which is a frequency range similar to BWP. The UE may receive GC-PDCCH/GC-PDSCH through the corresponding CFR.

A UE in connected mode may receive unicast PDCCH/PDSCH by activating one DL BWP, and may receive GC-PDCCH/GC-PDSCH through the CFR connected to the active DL BWP. At this time, the UE may transmit multicast HARQ-ACK (1115, 1125) for GC-PDCCH/GC-PDSCH. A UE in idle mode or inactive mode may receive GC-PDCCH through the CFR connected to the initial DL BWP.

Hereinafter, in the present disclosure, a method of configuring a TRS for SFN transmission of group common transmission (e.g., GC-PDCCH, GC-PDSCH) and a method of configuring mapping relationship(s) associated with a monitoring occasion (MO) will be described.

Embodiment 1

This embodiment relates to a TRS configuring method and a mapping method between TRS and MO for SFN transmission of group common transmission.

In an embodiment of the present disclosure, the base station may configure TRS as a QCL source related to SFN transmission of group common transmission. In the case of the TRS, the TRS may be configured differently for each cell group in which a specific service is provided. Here, the cell group may correspond to the SFN area, and the SFN area may refer to an area where the UE may receive multi-cell-based SFN transmission.

For example, if a cell supports SFN area 1 for service 1 and SFN area 2 for service 2, the base station may configure TRS through a system information block (SIB) and/or multicast control channel (MCCH) message for MBS purposes as follows.

- For SFN area 1 of service 1, 1st list of NZP CSI-RS resource sets for TRS
- For SFN area 2 of service 2, 2nd list of NZP CSI-RS resource sets for TRS

In addition, different NZP CSI-RS resource sets belonging to one NZP CSI-RS resource set for TRS may be configured to correspond to different PDCCH monitoring occasion (MO) and SSB.

In this embodiment, a specific method in which the base station configures the NZP CSI-RS resource set for TRS will be described.

For SFN transmission from multiple cells and/or multiple TRPs, the UE may receive TRS configuration through UE-dedicated signaling by the base station, MCCH, or SIB.

A list of NZP CSI-RS resource sets for TRS may be established for one or more G-RNTIs and/or one or more cell groups. As an example, a list of NZP-CSI-RS resource sets for TRS may be configured for one or more services in the same cell group.

At this time, the cell group may be configured with a group of cells that support SFN transmission of the same GC-PDCCH and the same GC-PDSCH for one or more G-RNTIs. The cell group may correspond to an SFN area for one or more G-RNTIs.

The list of NZP CSI-RS resource sets for TRP may be mapped to one or more SSB indexes for one or more cell groups. In this case, each NZP CSI-RS resource set for TRS may be mapped to one SSB index for one or more cell groups. Additionally, different NZP CSI-RS resource sets in the list of identical NZP CSI-RS resource sets may be mapped to the same/different SSB index for the same/different cell group.

As an example, different NZP CSI-RS resource sets for TRS may be mapped to the same SSB index for the same cell group. As another example, different NZP CSI-RS resource sets for TRS may be mapped to the same SSB index for different cell groups. As another example, different NZP CSI-RS resource sets for TRS may be mapped to different SSB indexes for the same cell group. As another example, different NZP CSI-RS resource sets for TRS may be mapped to different SSB indices for different cell groups.

Regarding the examples above, different cell groups may provide GC-PDCCH/GC-PDSCH for the same G-RNTI or different G-RNTI. Additionally/alternatively, one cell group may provide GC-PDCCH/GC-PDSCH for one or more G-RNTIs. Additionally/alternatively, different G-RNTIs may be mapped to the same NZP CSI-RS resource set or to different NZP CSI-RS resource sets. Additionally/alternatively, one G-RNTI may be mapped to a different NZP CSI-RS resource set.

QCL information (e.g., QCL-Info) associated with the NZP CSI-RS resource for TRS may be configured to Type C, which is QCLed with the SSB index through SIBx (e.g., SIB1, SIB2, ...) or MCCH. Here, Type C may be related to Doppler shift, average delay, etc. Alternatively, the QCL information is associated with the NZP CSI-RS resource set for TRS, and the corresponding NZP CSI-RS resource set may be configured to Type C, which is QCLed with the SSB index through SIBx (e.g., SIB1, SIB2, ...) or MCCH. Here, Type C may be related to Doppler shift, average delay, etc.

Regarding the SSB index, the corresponding SSB may be a cell-defining SSB including a MIB included in the initial DL BWP. Here, cell-defined SSB may mean an SSB that is configured/transmitted and received cell-specifically. Alternatively, the SSB may be a non-cell-defining SSB that does not include a MIB included in an active DL BWP that is available for a UE only in RRC_CONNECTED or for a UE receiving broadcast transmission in any state.

The number of NZP CSI-RS resource sets in the list of NZP CSI-RS resource sets for TRS may be configured for each cell group or cell groups associated with the list of NZP CSI-RS resource sets for TRS. The number of NZP CSI-RS resources per NZP CSI-RS resource set may be configured for each cell group or cell group associated with the NZP CSI-RS resource set.

In the case of broadcast GC-PDCCH, the UE may assume that the PDCCH monitoring occasion (MO) is associated with one NZP CSI-RS resource set for TRS QCLed with the SSB index mapped to the MO.

If the same SSB index may be associated with more than one NZP CSI-RS resource set for TRS, the same SSB index may be mapped to R MOs (e.g., R PDCCH MOs). Here, each of R MOs is associated with one NZP CSI-RS resource set for TRS in NZP-CSI-RS-ResourceSetPerSSB.

Here, R represents the number of NZP CSI-RS resource sets for TRS for each SSB index. That is, R value may correspond to the number of NZP-CSI-RS-ResourceSetPerSSB.

(Example 1-1) For example, the $r^{th}$ NZP-CSI-RS-ResourceSet of the NZP CSI-RS-ResourceSetPerSSB for the TRS corresponding to the $K^{th}$ transmitted SSB in the NZP-CSI-RS-ResourceSetList for one or more G-RNTIs and/or one or more cell groups and/or one or more G-RNTIs may be mapped to the $[x*N+K]^{th}$ PDCCH monitoring occasion in the scheduling window for one or more G-RNTIs and/or one or more cell groups. Here, the r value may correspond to x mode R+1.

In this example, in the case of an RRC IDLE/RRC INACTIVE UE for broadcast reception, the association between the PDCCH monitoring occasion and the SSB may be defined within the multicast traffic channel (MTCH) scheduling window in a manner described below. Specifically, the $[x*N+K]^{th}$ PDCCH monitoring occasion for the MTCH in the scheduling window may correspond to the $K^{th}$ transmitted SSB. Here, x = 0, 1, ..., X-1, K = 1, 2, ..., N, N represents the actual number of transmitted SSBs determined according to ssb-PositionInBurst in SIB1, X is equal to CEIL (number of PDCCH monitoring occasions in the MTCH transmission window/N). Here, CEIL() means ceiling function.

To associate PDCCH monitoring opportunities for SSB and MTCH as described above, the UE may assume that, in the MTCH scheduling window, the PDCCH for the MTCH scrambled by the G-RNTI is transmitted in at least one PDCCH monitoring occasion corresponding to each transmitted SSB.

(Example 1-2) As another example, the $r^{th}$ NZP-CSI-RS-ResourceSet of the NZP CSI-RS-ResourceSetPerSSB for the TRS corresponding to the $K^{th}$ transmitted SSB in the NZP-CSI-RS-ResourceSetList for one or more G-RNTIs and/or one or more cell groups may be sequentially mapped to the $[R*(K-1)+r]^{th}$ PDCCH monitoring occasions in the scheduling window for one or more G-RNTIs and/or one or more cell groups. Here, r is 0, 1, ..., R-1. In this example, the same $K^{th}$ transmitted SSB may be mapped to R multiple consecutive monitoring occasions (multiple consecutive MOs).

As a specific example, consider a case in which there are 32 MOs within the MTCH window (i.e., MTCH scheduling window), Eight SSBs (e.g., 1st SSB to 8th SSB divided by 8 SSB indices) are configured in the serving cell, ans four TRSs (e.g., the first TRS to the fourth TRS) are mapped to one SSB (i.e., one SSB index).

In this case, according to the method of Example 1-1 described above, SSB, TRS and MO may be mapped in the following order: 8 MOs for 8 SSBs for the 1st TRS, 8 MOs for 8 SSBs for the 2nd TRS, 8 MOs for 8 SSBs for the 3rd TRS, and 8 MOs for 8 SSBs for 4th TRS.

In contrast, according to the method of Example 1-2 described above, SSB, TRS, and MO may be mapped in the following order: 4 MOs for each of the 4 TRSs for the 1$^{st}$ SSB, 4 MOs for each of the 4 TRSs for the 2$^{nd}$ SSB, 4 MOs for each of the 4 TRSs for the 3$^{rd}$ SSB, 4 MOs for each of the 4 TRSs for the 4$^{th}$ SSB, 4 MOs for each of the 4 TRSs for the 5$^{th}$ SSB, 4 MOs for each of the 4 TRSs for the 6$^{th}$ SSB, 4 MOs for each of the 4 TRSs for the 7$^{th}$ SSB, and 4 MOs for each of the 4 TRSs for the 8$^{th}$ SSB.

In the detailed example above, TRS may correspond to one NZP CSI-RS resource set for TRS in the above description.

At this time, for one MTCH window, when 4 TRSs correspond to the same SSB, SSB may be transmitted based on a wide beam, and TRS may be transmitted based on a narrow beam. In this case, all four TRSs may support the same service or the same cell group (e.g., SFN area). Additionally/alternatively, in this case, a specific G-RNTI or a specific cell group may be mapped to all 4 MOs mapping to the same SSB.

Additionally/alternatively, for one MTCH window, when 4 TRSs correspond to the same SSB, two TRSs among these may correspond to G-RNTI#1 and/or SFN region #1, and the other two TRSs may correspond to G-RNTI#2 and/or SFN region #2. In this case, a list of one NZP CSI-RS resource sets may be mapped to multiple G-RNTIs or multiple cell groups (e.g., SFN areas). Additionally/alternatively, if 1 TRS and 1 MO are mapped, G-RNTI#1 and/or SFN area #1 may be configured to map only to the first two MOs among MOs mapped to the same SSB. G-RNTI#2 and/or SFN area #2 may be configured to map only to the last two MOs among MOs mapped to the same SSB.

When TRS is configured as described above in the present disclosure, the UE may use the TRS associated with the MO where the group common DCI (i.e., GC-DCI) scheduling the GC-PDSCH is received to determine the GC-PDSCH antenna port QCL. That is, the UE may apply the TRS connected to the GC-DCI to the GC-PDSCH scheduled by the corresponding GC-DCI. At this time, GC-DCI may not include the TCI field. Alternatively, if there is no separate configuration by the base station, the UE may ignore the TCI field included in GC-DCI.

Additionally/alternatively, the base station may configure/provide (to the UE) RRC configurations for the TCI field included in GC-DCI. For example, the base station may configure multiple TCI states for a specific CFR/specific G-RNTI/specific MTCH/specific MTCH window to the UE through CFR configuration information or group common MAC CE (i.e., GC-MAC CE). The UE interprets the codepoint of the received TCI field based on GC-DCI according to the settings for the TCI status, and may receive the GC-PDSCH scheduled by GC-DCI according to the TCI state indicated by the corresponding TCI field.

At this time, the UE may determine whether SFN transmission of GC-DCI or GC-PDSCH is transmitted according to the indication of GC-DCI. In the case of SFN transmission, the UE may receive GC-PDSCH according to TRS.

Alternatively, GC-DCI may be configured to indicate information on whether TRS is available. That is, for each CFR/G-RNTI/Windows/SSB index, it is possible to configure whether the corresponding GC-DCI may indicate a TRS availability indicator. If the GC-DCI for the G-RNTI that the UE performs to receive includes the TRS availability indicator, the UE may receive the GC-PDSCH scheduled by GC-DCI according to the TRS. At this time, depending on the base station configurations, the TRS availability indicator only indicates whether TRS is available, or it may also indicate the ID of the NZP CSI-RS resource set for TRS (e.g., NZP CSI-RS resource set ID) or the ID of the NZP CSI-RS resource for TRS (e.g., NZP CSI-RS resource ID).

Embodiment 2

This embodiment relates to a method of configuring a mapping relationship between SSB and monitoring occasion (MO) when SFN transmission is performed based on the method configuring a TRS in Embodiment 1 described above.

The MO described in this embodiment may correspond to the MO related to PDCCH monitoring. The window described in the present embodiment may mean a certain section in the (preconfigured/defined) time domain for transmitting and receiving a specific signal and/or channel.

When SFN transmission for GC-PDCCH/GC-PDSCH is performed based on the TRS configurations as described above, the base station may map SSB and MO as follows.

Specifically, the [x*N+K]$^{th}$ PDCCH monitoring occasion(s) in a specific MTCH window (i.e., a specific MTCH time window) may correspond to the K$^{th}$ transmitted SSB. The specific MTCH window may be replaced by on-duration time or active time. Here, x = 0, 1, ..., X-1, K = 1, 2, ..., N, N represents the actual number of transmitted SSBs according to the above description, X is equal to CEIL (number of PDCCH monitoring opportunities in windows/N). Here, CEIL() means ceiling function. Additionally, the actual transmission SSB may be numbered sequentially from 1 in ascending order of the corresponding SSB index.

In this regard, the base station may configure N actual transmission SSB(s) only with specific SSB(s) in the [x*N+K]$^{th}$ PDCCH MO(s) within a specific MTCH time window. At this time, a specific CFR/G-RNTI/G-RNTI group/search space/search space group may be configured to be mapped to the specific MTCH time window.

One or more cell groups or one or more SFN areas may be configured to be mapped to the specific MTCH time window described above. Additionally, the window for G-RNTI that is SFN and the window for G-RNTI that is not SFN may be configured differently. Here, a window for a G-RNTI that is not SFN may not be mapped to a cell group/SFN area, and a window for a G-RNTI that is SFN may be mapped to a cell group/SFN area. Alternatively, both the SFN G-RNTI and the non-SFN G-RNTI may be mapped to the same window. In this case, the G-RNTI that is SFNed and the G-RNTI that is not SFNed may be mapped to different MOs within the same window.

The GC-PDCCH and/or GC-PDSCH for the same SSB may be repeatedly transmitted in the specific MTCH time window described above. In addition, the window for the G-RNTI for which repetition transmission is configured and the window for the G-RNTI for which repetition transmission is not configured may be configured differently.

For example, when repetition transmission is configured, a plurality of MOs for the $K^{th}$ transmitted SSB within the corresponding window may be configured. If repetition transmission is not set, only one MO for the Kth transmitted SSB within the window may be configured.

For another example, when repetition transmission is configured, a plurality of MOs for the $K^{th}$ transmitted SSB are configured within the corresponding window, and the same GC-PDCCH transmission may be repeated in the plurality of MOs. When repetition transmission is not configured, even if multiple MOs for the $K^{th}$ transmitted SSB are configured within the window, GC-PDCCH transmission may occur in only one MO among the plurality of MOs. In this case, when the UE receives GC-PDCCH transmission in one MO, the UE may assume that there will be no GC-PDCCH transmission in other MO(s) for the same SSB within the same window. Accordingly, the UE may skip/omit PDCCH monitoring for the other MO(s) or lower the priority. Alternatively, when repetition transmission is not configured, if multiple MOs for the $K^{th}$ transmitted SSB are configured within the window, different MO(s) for the same SSB may perform different GC-PDCCH transmissions for different TB transmissions or different G-RNTI based transmissions.

As another example, both a G-RNTI that is SFNed and a G-RNTI that is not SFNed may be mapped to the same window. In this case, the G-RNTI that is SFNed and the G-RNTI that is not SFNed may be mapped to different MOs within the same window. As an example, the first MO for the same SSB in windows may support SFN, and the second MO may not support SFN. In this case, the UE may monitor the PDCCH by applying TRS as a QCL source in the first MO, and may monitor the PDCCH by applying only the SSB of the serving cell as a QCL source in the second MO.

If TRS is configured as the QCL source for a specific window or a specific MO, or both TRS and SSB are configured, the UE may assume that SFN transmission will be performed in the corresponding window or corresponding MO. In contrast, if TRS is not configured as the QCL source for a specific window or a specific MO, the UE may assume that SFN transmission will not be performed in the window or MO.

Additionally/alternatively, the base station may configure the actual transmission SSB(s) only with different SSB(s) for the different time windows described above. As an example, multiple time windows may be configured within a modification period, the actual number of transmitted SSBs (e.g., N value) may be set differently for each time window. Additionally, SSB indices of actual transmission SSBs may be set differently for each time window. Here, the time window for a specific G-RNTI or a specific G-RNTI group may be configured to include all SSBs in the cell.

As a specific example, consider the case where the correction period is set to 5 seconds, 100 time windows are set within 5 seconds, and 10 G-RNTI groups or 10 GN-RNTIs are divided and mapped into 100 time windows. do. The mapping between G-RNTI (group) and window may be configured to repeat every modification cycle.

At this time, the base station may be configured to transmit only PDCCH/PDSCH for $N_k$ actual transmission SSB(s) within one or more time windows for the $k^{th}$ G-RNTI group or $k^{th}$ G-RNTI. At this time, the plurality of time windows may be repeated according to a period equal to $P_k$ (e.g., 160 ms). Here, $N_k$ may be equal to or smaller than the total number of SSBs in the cell. The same or different $N_k$ and $P_k$ values may be set for different k values, and the $N_k$ and $P_k$ values may change at each modification cycle. The base station may set the same or different $N_k$ values and $P_k$ values for each G-RNTI group/G-RNTI/CFR/time window at every modification cycle. Such $N_k$ values and $P_k$ values may be transmitted through MCCH once or multiple times in each modification cycle. The base station may confiure the same or different time window lengths for each G-RNTI group/G-RNTI/CFR/time window at every modification cycle.

Additionally/alternatively, the base station may configure different actual transmission SSB(s) for different CFRs. As an example, the actual number of transmission SSBs (e.g., N value) may be set differently for each CFR. Additionally, SSB indices of actual transmission SSBs may be configured differently for each CFR. At this time, a specific G-RNTI or a specific G-RNTI group may be configured to be mapped to a specific CFR. Alternatively, a specific G-RNTI or a specific G-RNTI group may be configured to be mapped to a specific time window of a specific CFR.

Additionally/alternatively, the base station may be configured to configure SFN for different CFRs or not to configure SFN. As an example, it may be configured to perform SFN transmission for each CFR or not to perform SFN transmission. Alternatively, different SFN areas may be configured for each CFR. As a specific example, CFR#1 may configure G-RNTI#1 and/or SFN area#1, CFR#2 may configure G-RNTI#2 and/or SFN area#2, CFR#3 may configure G-RNTI#3, but may not configure the SFN area.

Here, the TRS as described above in the present disclosure may be configured in the CFR in which the SFN area is configured. At this time, TRS may be configured for each CFR, or a specific TRS configuration may be configured to be mapped to one or more CFRs. Alternatively, a specific TRS configuration may be configured to be mapped to one or more G-RNTIs. Alternatively, a specific TRS configuration may be configured to be mapped to one or more cell groups or one or more SFN areas. Alternatively, a specific TRS configuration may be configured to be mapped to one or more search space IDs or one or more CORESET IDs. Alternatively, a specific TRS configuration may be configured to map only to one or more MOs or one or more SSB indexes within a window.

Additionally/alternatively, the UE that wishes to receive GC-DCI and PDSCH for a specific G-RNTI may receive GC-DCI and PDSCH by selecting the CFR/control channel-related resource/time window/MO/SSB index to which a specific G-RNTI is mapped. Here, the control channel-related resource may correspond to a search space, a search space group, or CORESET. At this time, the UE may receive DCI (i.e., GC-DCI) or PDSCH according to the TRS configurations for the mapped CFR/control channel-related resources/time window/MO/SSB index.

In this regard, only N specific SSB(s) may be provided in a specific time window. For example, if the SSB for a specific G-RNTI is transmitted only for SSB#4, SSB#5, SSB#6, and SSB#7, the N value may be set to 4. The base station may broadcast SSB#4, SSB#5, SSB#6, and SSB#7 to the UE through a bitmap for SSB. Such configurations may be broadcast through SIB, MCCH, or GC-MAC CE for MBS purposes.

At this time, if SSB#4, SSB#5, SSB#6, and SSB#7 are greater than the threshold, the UE may monitor the DCI for the G-RNTI corresponding to one or multiple SSBs of SSB#4, SSB#5, SSB#6, and SSB#7. On the other hand, if SSB#4, SSB#5, SSB#6, and SSB#7 are less than the threshold, the UE may not monitor the DCI for the corresponding G-RNTI. Here, the threshold may be configured separately by the base station through SIB or MCCH, etc. If there is no separately configured threshold, the UE may use the threshold for the serving cell measurement purpose as the threshold for the above-mentioned purpose.

Additionally, when there are multiple time windows mapped to a specific G-RNTI, different time windows may provide group common transmission for different SSBs. As an example, the same G-RNTI may be configured to be mapped to a time window of SFN=5 and a time window of SFN=10, a time window of SFN=5 may be configured to provide group common transmission for SSB#4 and SSB#5, and a time window of SFN=10 may be configured to provide group common transmission for SSB#6 and SSB#7. In this case, the UE may receive group common transmission by selecting one time window according to the optimal SSB (that is, the SSB with optimal reception quality (best)).

Unlike the method of configuring the mapping relationship between SSB and MO described above in the embodiment of the present disclosure, the base station may configure all SSBs configured with SIB1 in the $[x*N+K]^{th}$ PDCCH MO(s) within a specific time window, but may actually be configured to transmit PDCCH only for specific SSB(s). At this time, a specific CFR/G-RNTI/G-RNTI group/search space/search space group may be configured to be mapped to the specific time window.

For example, for PDCCH MO(s) for all N SSBs, the base station may be configured to transmit GC-DCI (i.e., DCI over GC-PDCCH) and GC-PDSCH only for specific SSB(s). In this case, the UE may perform PDCCH monitoring for a specific SSB according to the threshold, and may receive the GC-PDSCH scheduled by the DCI (i.e., GC-DCI) only when the UE receives the GC-DCI for a specific SSB.

At this time, the base station may inform the UE of information on SSB index(s) for non-transmitted PDCCH (i.e., GC-PDCCH) or SSB index(s) for the transmitted PDCCH (i.e., GC-PDCCH). For example, through MCCH or MAC CE (e.g. GC-MAC CE), the base station may configure information on SSB index used for actual transmission or SSB index not used for actual transmission for each G-RNTI/Service/CFR/Window/SFN area (i.e., cell group).

If a specific SSB index is not used for transmission, and a TRS mapped to the corresponding SSB index is configured, the UE may not perform monitoring on the MO mapped to the corresponding SSB or the MO mapped to the corresponding TRS. Alternatively, among a plurality of TRSs corresponding to a specific SSB index, some TRSs may be configured to be used for transmission, and other TRSs may be configured not to be used for transmission. In this case, the UE may perform monitoring only for MOs mapped to TRSs used for transmission and may not perform monitoring for MOs mapped to TRSs not used for transmissions. This information may be updated in the next (i.e., subsequent) MCCH cycle.

For another example, for PDCCH MO(s) for all N SSBs, the base station may be configured to transmit GC-DCI (i.e., DCI over GC-PDCCH) for all SSBs, but may be configured to transmit GC-PDSCH only for specific SSB(s).

At this time, the DCI for the SSB in which the GC-PDSCH (e.g., GC-DCI) is not transmitted may inform/indicate that the corresponding PDSCH is not transmitted. Alternatively, the DCI for the SSB in which the GC-PDSCH (e.g., GC-DCI) is not transmitted may indicate that the GC-PDSCH is transmitted based on another SSB. At this time, DCI may indicate the TCI state for other SSBs. Additionally, in this regard, the UE may perform PDCCH monitoring for a specific SSB according to a threshold. When the UE receives a DCI for a specific SSB, the UE may receive the GC-PDSCH scheduled by the DCI if it is associated with a specific SSB. On the other hand, if the GC-PDSCH scheduled by the DCI is not associated with a specific SSB, the UE may receive the GC-PDSCH only when the measurement value for the SSB associated with the GC-PDSCH is greater than or equal to the threshold.

In the above-described method, for different time windows, the base station may be configured to transmit or not transmit GC-DCI (i.e., DCI over GC-PDCCH) and/or GC-PDSCH for the same or different SSB(s). As a specific example, consider the case where the correction period is set to 5 seconds, 100 time windows are set within 5 seconds, and 10 G-RNTI groups or 10 G-RNTIs are divided and mapped into 100 time windows. The mapping between G-RNTI (group) and window may be set to repeat every modification cycle. At this time, the base station may be configured to transmit GC-DCI/PDSCH only for $N_k$ SSB(s) among all SSBs within one or more time windows for the $k^{th}$ G-RNTI group or $k^{th}$ G-RNTI. At this time, the plurality of time windows may be repeated according to a period equal to $P_k$ (e.g., 160 ms). Here, $N_k$ may be equal to or smaller than the total number of SSBs in the cell. The same or different $N_k$ and $P_k$ values may be set for different k values, and the $N_k$ and $P_k$ values may change at each modification cycle. The base station may configure the same or different $N_k$ values and $P_k$ values for each G-RNTI group/G-RNTI/CFR/time window at every modification cycle. Such $N_k$ values and $P_k$ values may be transmitted through MCCH once or multiple times in each modification cycle.

Additionally, with regard to the above-described methods, if the above-mentioned time window is an MTCH window for MTCH data transmission, the UE may perform monitoring on the PDCCH MO based on at least one of the following methods (methods 2-1 to 2-4) depending on the time window configuration.

(Method 2-1) A method of performing a specific MTCH window or one or more SSB indexes/one or more MOs within a specific MTCH window to a plurality of G-RNTIs may be considered.

In this regard, the base station may configure one MTCH window to be mapped to a plurality of G-RNTIs through RRC signaling and/or MAC-CE. In this case, a UE that wishes to receive transmission for a certain G-RNTI can monitor the PDCCH through an MTCH window mapped to the corresponding G-RNTI. Additionally/alternatively, the base station may allow the MTCH window to be mapped to a plurality of G-RNTIs according to a specific formula. In this case, a UE that wishes to receive transmission for a certain G-RNTI may monitor the PDCCH by determining the MTCH window mapped to the corresponding G-RNTI according to the above specific formula. Additionally/alternatively, the base station may configure one or more SSB indices/one or more MOs within a specific MTCH to be mapped to one or more G-RNTIs. In this case, a UE that wishes to receive transmission for a certain G-RNTI may monitor the PDCCH through the MO for the SSB index mapped to the corresponding G-RNTI or the MO mapped to the corresponding G-RNTI.

(Method 2-2) A method in the case where there is no information that a specific MTCH window configured by the base station is mapped to a specific G-RNTI may be considered.

In this regard, the UE may attempt to receive all G-RNTIs it wishes to receive during the PDCCH MO(s) of the MTCH window.

Additionally/alternatively, the UE may attempt reception for a specific G-RNTI according to Discontinuous Reception (DRX) configurations for each G-RNTI during the PDCCH MO(s) of the MTCH window. To this end, the base station may provide/configure separate DRX configuration information for each G-RNTI or G-RNTI group for broadcast or all GC-PDCCHs to the UE. Accordingly, the UE may determine the on-duration period for the G-RNTI according to the DRX configurations for the specific G-RNTI it wishes to receive, and may monitor the DCI for the G-RNTI during the determined on-duration. At this time, the on-duration section may be defined only within the MTCH window. Alternatively, the on-duration period for a specific G-RNTI may be configured/defined based on a number of MTCH windows in which the specific G-RNTI may be scheduled. As an example, the DRX-related on-duration length for broadcast reception may be configured as a multiple of the MTCH window length using the MTCH window length as the basic unit.

Additionally/alternatively, the UE may attempt to receive a specific G-RNTI according to the search space configurations for each G-RNTI during the PDCCH MO(s) of the MTCH window. For this purpose, the base station may provide/configure separate search space configuration information for each G-RNTI or G-RNTI group for broadcast or all GC-PDCCHs to the UE. Accordingly, the UE may monitor the DCI for the specific G-RNTI it wishes to receive according to the search space configurations for the specific G-RNTI. At this time, the search space for G-RNTI may be defined only within the MTCH window.

Additionally/alternatively, the UE may attempt reception for a specific G-RNTI according to one or more MOs per G-RNTI during the PDCCH MO(s) of the MTCH window.

Additionally/alternatively, the UE may attempt reception for a specific G-RNTI according to one or more SSB indexes for each G-RNTI during the PDCCH MO(s) of the MTCH window. A UE that wishes to receive a specific G-RNTI may receive transmission according to the G-RNTI when the measurement value for the corresponding SSB index is above the threshold, otherwise, the UE may not receive transmission according to the G-RNTI.

Additionally/alternatively, the UE may attempt reception for a specific G-RNTI according to one or more TRSs per G-RNTI during the PDCCH MO(s) of the MTCH window. A UE that wishes to receive a specific G-RNTI may receive transmission according to the corresponding G-RNTI when the measurement value for the corresponding TRS is above the threshold, otherwise, the UE may not receive transmission according to the corresponding G-RNTI.

(Method 2-3) A method in which the GC-DCI received within the MTCH window schedules the GC-PDSCH within the corresponding MTCH window or outside the corresponding MTCH window may be considered.

In this regard, DCI (i.e., GC-DCI) may be configured/defined to schedule PDSCH (i.e., GC-PDSCH) only in slots within the MTCH window. At this time, if the k0 value of the GC-DCI received by the terminal within the MTCH window (i.e., a value indicating the time from the DCI reception timing to the PDSCH) exceeds the MTCH window, the UE may ignore the DCI and not receive the PDSCH scheduled/indicated by the DCI. Additionally, if DCI indicates repetition, some PDSCH repetition transmissions may beyond outside the MTCH window. If some slots of slot-based PDSCH repetition are outside the MTCH window, the UE may be configured not to receive repeated PDSCH transmissions that exceed the MTCH window depending on the configurations of the base station.

Additionally/alternatively, DCI (i.e., GC-DCI) may be configured/defined to schedule PDSCH (i.e., GC-PDSCH) in a slot outside the MTCH window. At this time, if the k0 value of the GC-DCI received by the terminal within the MTCH window (i.e., a value indicating the time from the DCI reception timing to the PDSCH) exceeds the MTCH window, the UE may receive the PDSCH scheduled/indicated by the DCI beyond the MTCH window. Additionally, when DCI indicates repetition, some PDSCH repetition transmissions may deviate from the MTCH window. If some slots of slot-based PDSCH repetition are outside the MTCH window, the UE may be configured to receive repeated PDSCH transmissions that exceed the MTCH window depending on the configurations of the base station.

Additionally, since SSB mapping may only occur within an MTCH window, if the k0 value of GC-DCI (i.e., a value indicating the time from DCI reception to the PDSCH) schedules a PDSCH outside the MTCH window, if the DCI includes an indication of the TCI status, the UE may receive the PDSCH based on the indicated TCI state. On the other hand, if that DCI does not contain an indication of the TCI state, the UE may receive the PDSCH based on the same SSB as the corresponding DCI (i.e., the SSB index used to receive the corresponding DCI).

(Method 2-4) A method in which a specific search space or a specific search space group is mapped to one or more SFN areas may be considered.

In this regard, through RRC signaling or MAC CE of the base station, a specific search space or a specific search space group may be mapped to one or more SFN areas. In this case, a UE that knows which G-RNTI it wants to receive may monitor the PDCCH through a specific search space or specific search space group mapped to the corresponding SFN area. Additionally/alternatively, the base station may configure a specific search space or a specific search space group along with a specific MTCH window to be mapped to one or more SFN areas. In this case, a UE that knows which G-RNTI it wants to receive may monitor the PDCCH through a specific search space or a specific search group space in the MTCH window for the SFN area mapped to the G-RNTI.

Embodiment 3

This embodiment relates to a CFR setting method for group common transmission (e.g., broadcast, multicast, etc.) in the above-described embodiments (e.g., Embodiment 1 and Embodiment 2) of the present disclosure.

Hereinafter, the proposed method in this embodiment will be explained using the case of broadcast transmission as a main example, but the proposed method can be extended and applied to other types of group common transmission (e.g., multicast).

For example, a UE in idle mode or inactive mode may receive the GC-PDCCH/GC-PDSCH for broadcast through the initial BWP or CFR including the initial BWP. If CFR is configured to a bandwidth wider than the initial BWP, the UE may perform reception of the CFR bandwidth only during the time interval when an interesting (i.e., interested) service is transmitted. On the other hand, the UE may receive the bandwidth of the initial BWP during a time period in which interesting services are not transmitted. Here, the bandwidth of the initial BWP may correspond to the bandwidth of CORESET0 configured by a master information block (MIB), or may correspond to the bandwidth of the initial BWP configured by system information block 1 (SIB1).

When a UE receiving broadcast transmission in idle mode or deactivated mode switches to connected mode through RRC setup or RRC resume process, the UE may configure/determine the active BWP of the terminal according to the RRC setup message or RRC resume message. At this time, the active BWP of the corresponding UE may be configured to include the CFR for broadcast, or the CFR for broadcast may be configured to include the active BWP of the corresponding UE.

Additionally/alternatively, the start point or end point of the CFR in the frequency domain may not match the boundaries of the resource block group (RBG), precoding resource block group (PRG), and/or RB bundle in the initial DL BWP or the active DL BWP of the UE (e.g., see FIG. 9). If the frequency domain of the CFR includes the initial DL BWP or the active DL BWP of the UE and the CFR is wider than the initial DL BWP or the active DL BWP of the UE in the frequency domain, the RBG, PRG, and/or RB bundle portion that overlaps the CFR may be changed when the terminal switches to the connected mode as described above. Alternatively, when the UE performs switching to DL BWP for unicast (i.e., BWP switching), the RBG, PRG, and/or RB bundle portion overlapping with the CFR may changed depending on the switching.

While the CFR and the initial DL BWP are commonly configured for multiple UEs, the active BWP of the UE (e.g., the active DL BWP of the UE) may be configured to be dedicated to a specific UE. Therefore, the RBG, PRG, and/or RB bundle of CFR and initial DL BWP need to be commonly applied to all UEs.

First, consider the case where the UE that has configure the CFR (i.e., the UE that has been configured with the CFR) activates is in idle mode/inactive mode or activating the initial DL BWP in connected mode and the corresponding CFR includes the initial DL BWP in the frequency domain.

In this case, a UE in idle mode or inactive mode may configure/check the RBG/PRG/RB bundle of the CFR for broadcast based on at least one of the following methods (hereinafter, methods 3-1 to 3-3).

(Method 3-1) For a UE in idle mode or deactivated mode, if the start or end point of the initial DL BWP in the frequency domain does not match the boundary of the RBG/PRG/RB bundle of the CFR, the UE may not use the RBG/PRG/RB bundle of the CFR that overlaps the start or end point of the initial DL BWP for transmission of GC-PDCCH/GC-PDSCH. That is, the UE may be configured to not expect or ignore the transmission of GC-PDCCH/GC-PDSCH in the RBG/PRG/RB bundle of the CFR that overlaps the start or end point of the initial DL BWP.

(Method 3-2) For a UE in idle mode or inactive mode, if the start or end point of the initial DL BWP in the frequency domain does not match the boundary of the RBG/PRG/RB bundle of the CFR, the RBG/PRG/RB bundle of the CFR that overlaps the start or end point of the initial DL BWP may be configured to be split based on the start or end point of the initial DL BWP. According to the division, the RBG/PRG/RB bundle portion located outside the initial DL BWP may be indexed separately, and the UE may use the corresponding RBG/PRG/RB bundle part for transmission of GC-PDCCH/GC-PDSCH based on the indexing. That is, the UE may be configured to perform a reception operation for transmission of GC-PDCCH/GC-PDSCH in the corresponding RBG/PRG/RB bundle portion based on the indexing.

(Method 3-3) For a UE in idle mode or inactive mode, the UE may be configured not to expect cases where the start or end point of the initial DL BWP in the frequency domain does not match the boundary of the RBG/PRG/RB bundle of the CFR.

A UE in idle mode or inactive mode may configure the RBG/PRG/RB bundle of the CFR according to at least one of the above-described methods (i.e., methods 3-1 to 3-3). After the UE switches to connected mode, or immediately after switching from the initial BWP to the active BWP of the UE (i.e., UE-dedicated BWP), the RBG/PRG/RB bundle of CFR for broadcast may be configured/confirmed based on at least one of the following examples. The examples below may be applied to both cases where the CFR includes the active BWP of the UE or when the active BWP of the UE includes the CFR in the frequency domain.

As an example, after switching to connected mode, or immediately after switching from the initial BWP to the active BWP of the terminal, regardless of the active BWP of the currently activated UE, the UE may configure the RBG/PRG/RB bundle of the CFR for broadcast based on the initial DL BWP, like the above-described method applied immediately (i.e., at least one of methods 3-1 to 3-3). As another example, after switching to connected mode, or immediately after switching from the initial BWP to the active BWP of the UE, the UE may be configured not to expect cases where the start or end point of the active DL BWP of the UE in the frequency domain does not match the boundary of the RBG/PRG/RB bundle of the CFR.

Next, consider the case where the UE that has configure the CFR (i.e., the UE that has been configured with the CFR) is in idle mode/inactive mode or activating the initial DL BWP in connected mode and the initial DL BWP includes the corresponding CFR in the frequency domain.

In this case, the UE (in idle mode or inactive mode) may configure/check the RBG/PRG/RB bundle of the CFR for broadcast based on at least one of the following methods (hereinafter, methods 3-A and 3-B).

(Method 3-A) The UE may split the RBG/PRG/RB bundle of the initial DL BWP that does not match the start or end point of the CFR in the frequency domain. According to the split, the RBG/PRG/RB bundle portion located outside the CFR may be indexed separately, Based on the indexing, the UE may use the corresponding RBG/PRG/RB bundle part to transmit PDCCH/PDSCH for system information/paging/RACH, etc. That is, the UE may be configured to perform a reception operation for transmission of PDCCH/PDSCH for system information/paging/RACH, etc. in the corresponding RBG/PRG/RB bundle part based on the indexing.

(Method 3-B) The UE may not use the RBG/PRG/RB bundle of the initial DL BWP that does not match the start or end point of the CFR in the frequency domain for transmission of PDCCH/PDSCH for system information/paging/RACH, etc. in other words, the UE may be configured to not expect or ignore transmission of PDCCH/PDSCH for system information/paging/RACH, etc. in the RBG/PRG/RB bundle of the initial DL BWP that overlaps the start or end point of the CFR.

The UE may configure the RBG/PRG/RB bundle of the CFR according to at least one of the above-described methods (i.e., methods 3-A to 3-B). After the UE switches to connected mode, or immediately after switching from the initial BWP to the active BWP of the UE (i.e., UE-dedicated BWP), the RBG/PRG/RB bundle of CFR for broadcast may be configured/confirmed based on at least one of the following examples. The examples below may be applied to both cases where the CFR includes the active BWP of the UE or when the active BWP of the UE includes the CFR in the frequency domain.

As an example, after switching to connected mode, or immediately after switching from the initial BWP to the active BWP of the UE, regardless of the active BWP of the currently activated UE, the UE may configure the RBG/PRG/RB bundle of the CFR for broadcast based on the initial DL BWP, similar to the above-described method applied immediately (i.e., at least one of methods 3-A and 3-B). As another example, after switching to connected mode, or immediately after switching from the initial BWP to the active BWP of the UE, the UE may be configured not to expect cases where the start or end point of the active DL BWP of the uE in the frequency domain does not match the boundary of the RBG/PRG/RB bundle of the CFR.

For example, for CFR for broadcast or CFR for multicast, if CFR is restricted within the active DL BWP of the UE, the unicast RBG/PRG for the active BWP of the UE may overlap with the start/end of the CFR. In this case, for the symbol or slot for the search space for GC-DCI is configured or for which GC-PDSCH is scheduled, the UE may assume that the unicast RBG/PRG overlapping the start/end of the CFR is separated into two parts, and each part is indexed separately. Additionally/alternatively, in this case, for the symbol or slot for which the search space for GC-DCI is configured or for which GC-PDSCH is scheduled, the UE may assume that only RB(s) outside the CFR are used for unicast PDSCH for unicast RBG/PRG overlapping the CFR boundary.

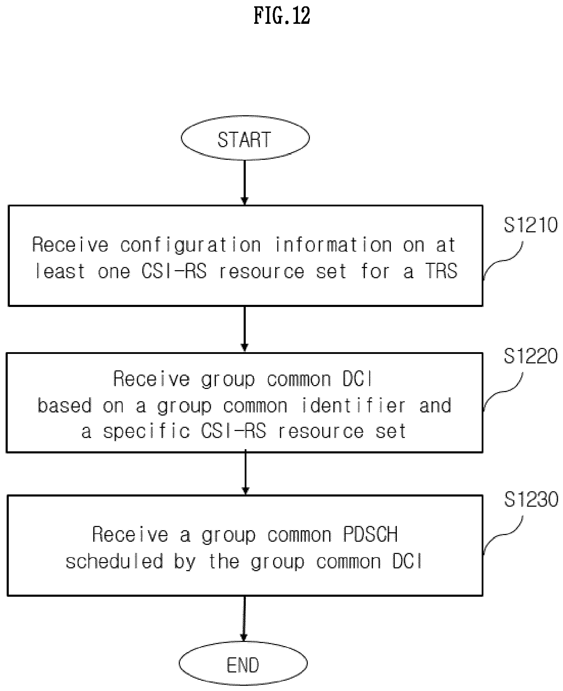

FIG. 12 is a diagram illustrating the operation of a UE for a method of transmitting and receiving group common information according to an embodiment of the present disclosure.

FIG. 12 illustrates the operation of a UE based on the previously proposed method (e.g., any one or a combination of embodiments 1 to 3 and detailed embodiments thereof). The example in FIG. 12 is for convenience of explanation and does not limit the scope of the present disclosure. Some step(s) illustrated in FIG. 12 may be omitted depending on the situation and/or setting. Additionally, the UE in FIG. 12 is only an example and may be implemented as a device illustrated in FIG. 14 below. For example, the processor 102/202 of FIG. 14 may control to transmit or receive channel/signal/data/information, etc. (e.g., RRC signaling, MAC CE, UL/DL scheduling). DCI, SRS, PDCCH, PDSCH, PUSCH, PUCCH, etc.) using the transceiver 106/206 and may control to store received channels/signals/data/information, etc. in the memory 104/204.

Referring to FIG. 12, in step S1210, the UE may receive configuration information on at least one CSI-RS resource set for TRS from the network.

Here, the at least one CSI-RS resource set may be configured for at least one of one or more group common identifiers (e.g., G-RNTI) or one or more cell groups (e.g., cell groups corresponding to SFN areas).

For example, as in the embodiments of the present disclosure described above, the UE may receive information on a list of CSI-RS resource sets for TRS. In this case, the list may include configurations for one or more CSI-RS resource sets, and each CSI-RS resource set may include one or more CSI-RS resources for TRS.

In addition, for example, as in the embodiments of the present disclosure described above, each of the one or more cell groups may include one or more cells that support a single frequency network (SFN) transmission method for group common information (e.g., group common DCI and group common PDSCH).

In step S1220, the UE may receive a group common DCI from the network based on a specific CSI-RS resource set and a group common identifier (e.g., G-RNTI) among the at least one CSI-RS resource set.

For example, as in the embodiments of the present disclosure described above, the UE may receive GC-DCI for a specific G-RNTI based on a TRS configuration.

In this case, the monitoring occasion (i.e., PDCCH monitoring occasion) for receiving the corresponding GC-DCI may be mapped to the TRS configuration and the SSB (i.e., SSB index) associated with the TRS. As in the embodiments of the present disclosure described above, the monitoring occasion(s) in a certain time interval for group common transmission (e.g., MTCH time window) may be mapped to TRS and SSB based on a TRS-related configuration, etc.

For example, the specific CSI-RS resource set may be (directly) associated with at least one PDCCH monitoring occasion for the group common DCI. For another example, the at least one CSI-RS resource set may be mapped to one or more SSB indexes. Based on this, the specific CSI-RS resource set may be mapped to an SSB index associated with at least one PDCCH monitoring occasion for the group common DCI among the one or more SSB indexes.

For example, as in the embodiments of the present disclosure described above, the group common DCI and the group common PDSCH may be based on a broadcast transmission method.

In step S1230, the UE may receive a group common physical downlink shared channel (PDSCH) scheduled by the group common DCI from the network.

The operation in FIG. 12 described above may be embodied based on the proposed method in the embodiments described in the present disclosure (e.g., one or a combination of embodiments 1 to 3 and detailed embodiments thereof).

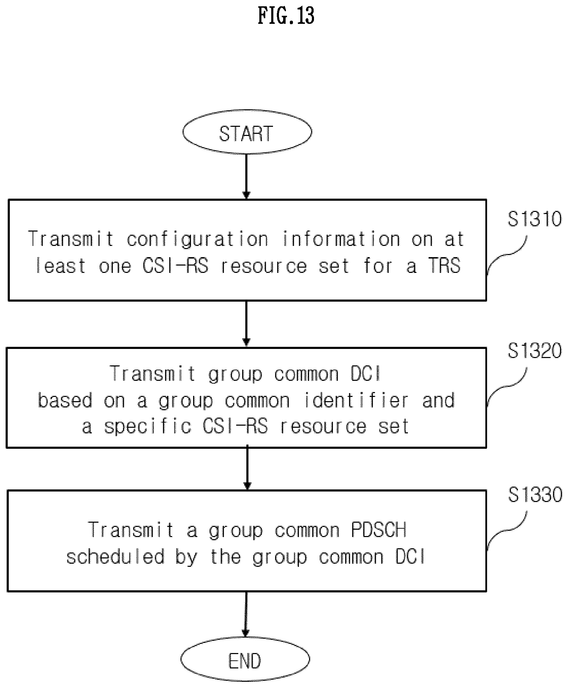

FIG. 13 is a diagram illustrating the operation of a base station for a method of transmitting and receiving group common information according to an embodiment of the present disclosure.

FIG. 13 illustrates the operation of a base station based on the previously proposed method (e.g., any one or a combination of embodiments 1 to 3 and detailed embodiments thereof). The example in FIG. 13 is for convenience of explanation and does not limit the scope of the present disclosure. Some step(s) illustrated in FIG. 13 may be omitted depending on the situation and/or setting. Additionally, the base station in FIG. 13 is only an example and may be implemented as a device illustrated in FIG. 14 below. For example, the processor 102/202 of FIG. 14 may control to transmit or receive channel/signal/data/information, etc. (e.g., RRC signaling, MAC CE, UL/DL scheduling). DCI, SRS, PDCCH, PDSCH, PUSCH, PUCCH, etc.) using the transceiver 106/206 and may control to store received channels/signals/data/information, etc. in the memory 104/204.

Referring to FIG. 13, in step S1310, the base station may transmission configuration information on at least one CSI-RS resource set for TRS to one or more UEs.

Here, the at least one CSI-RS resource set may be configured for at least one of one or more group common identifiers (e.g., G-RNTI) or one or more cell groups (e.g., cell groups corresponding to SFN areas).

For example, as in the embodiments of the present disclosure described above, the UE may receive information on a list of CSI-RS resource sets for TRS. In this case, the list may include configurations for one or more CSI-RS resource sets, and each CSI-RS resource set may include one or more CSI-RS resources for TRS.

In addition, for example, as in the embodiments of the present disclosure described above, each of the one or more cell groups may include one or more cells that support a single frequency network (SFN) transmission method for group common information (e.g., group common DCI and group common PDSCH).

In step S1320, the base station may transmit a group common DCI based on a specific CSI-RS resource set and a group common identifier (e.g., G-RNTI) among the at least one CSI-RS resource set to one or more UEs.

For example, as in the embodiments of the present disclosure described above, the base station may transmit GC-DCI for a specific G-RNTI based on a TRS configuration to the UE.

In this case, the monitoring occasion (i.e., PDCCH monitoring occasion) for receiving the corresponding GC-DCI may be mapped to the TRS configuration and the SSB (i.e., SSB index) associated with the TRS. As in the embodiments of the present disclosure described above, the monitoring occasion(s) in a certain time interval for group common transmission (e.g., MTCH time window) may be mapped to TRS and SSB based on a TRS-related configuration, etc.

For example, the specific CSI-RS resource set may be (directly) associated with at least one PDCCH monitoring occasion for the group common DCI. For another example, the at least one CSI-RS resource set may be mapped to one or more SSB indexes. Based on this, the specific CSI-RS resource set may be mapped to an SSB index associated with at least one PDCCH monitoring occasion for the group common DCI among the one or more SSB indexes.

For example, as in the embodiments of the present disclosure described above, the group common DCI and the group common PDSCH may be based on a broadcast transmission method.

In step S1330, the base station may transmit a group common physical downlink shared channel (PDSCH) scheduled by the group common DCI to one or more UEs.

The operation in FIG. 13 described above may be embodied based on the proposed method in the embodiments described in the present disclosure (e.g., one or a combination of embodiments 1 to 3 and detailed embodiments thereof).

General Device to which the Present Disclosure may be applied

FIG. 14 illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned.

Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed randomaccess memory such as DRAM, SRAM, DDR RAM or other randomaccess solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of receiving group common information by a user equipment (UE) in a wireless communication system, the method comprising:

receiving, from a network, configuration information on at least one channel state information-reference signal (CSI-RS) resource set for a tracking reference signal (TRS);
receiving, from the network, group common downlink control information (DCI) based on a group common identifier and a specific CSI-RS resource set among the at least one CSI-RS resource set; and
receiving, from the network, a group common physical downlink shared channel (PDSCH) scheduled by the group common DCI,
wherein the at least one CSI-RS resource set is configured for at least one of one or more group common identifiers or one or more cell groups including the group common identifier.

2. The method of claim 1,
wherein each of the one or more cell groups includes one or more cells that support a single frequency network (SFN) transmission method for the group common DCI and the group common PDSCH.

3. The method of claim 1,
wherein the group common DCI is received according to quasi co-location (QCL) information based on the specific CSI-RS resource set.

4. The method of claim 3,
wherein the group common PDSCH is received by applying the QCL information based on the specific CSI-RS resource set.

5. The method of claim 3,
wherein the QCL information is configured with a QCL type related to doppler shift and average delay.

6. The method of claim 1,
wherein the specific CSI-RS resource set is associated with at least one physical downlink control channel (PDCCH) monitoring occasion for the group common DCI.

7. The method of claim 1,
wherein the at least one CSI-RS resource set is mapped to one or more synchronization signal block (SSB) indices.

8. The method of claim 7,
wherein the specific CSI-RS resource set is mapped to an SSB index associated with at least one PDCCH monitoring occasion for the group common DCI among the one or more SSB indices.

9. The method of claim 1,
wherein the group common identifier is a group-radio network temporary identifier (G-RNTI).

10. The method of claim 1,
wherein the group common DCI and the group common PDSCH is based on a broadcast transmission method.

11. A user equipment (UE) of receiving group common information in a wireless communication system, the UE comprising:

at least one transceiver for transmitting and receiving a wireless signal; and
at least one processor for controlling the at least one transceiver,
wherein the at least one processor configured to:

receive, from a network, configuration information on at least one channel state information-reference signal (CSI-RS) resource set for a tracking reference signal (TRS);
receive, from the network, group common downlink control information (DCI) based on a group common identifier and a specific CSI-RS resource set among the at least one CSI-RS resource set; and
receive, from the network, a group common physical downlink shared channel (PDSCH) scheduled by the group common DCI,
wherein the at least one CSI-RS resource set is configured for at least one of one or more group common identifiers or one or more cell groups including the group common identifier.

12. A method of transmitting group common information by a base station in a wireless communication system, the method comprising:

transmitting, to a user equipment (UE), configuration information on at least one channel state information-reference signal (CSI-RS) resource set for a tracking reference signal (TRS);
transmitting, to the UE, group common downlink control information (DCI) based on a group common identifier and a specific CSI-RS resource set among the at least one CSI-RS resource set; and
transmitting, to the UE, a group common physical downlink shared channel (PDSCH) scheduled by the group common DCI,
wherein the at least one CSI-RS resource set is configured for at least one of one or more group common identifiers or one or more cell groups including the group common identifier.

13. A base station of transmitting group common information in a wireless communication system, the base station comprising:

at least one transceiver for transmitting and receiving a wireless signal; and
at least one processor for controlling the at least one transceiver,
wherein the at least one processor configured to:

transmit, to a user equipment (UE), configuration information on at least one channel state information-reference signal (CSI-RS) resource set for a tracking reference signal (TRS);
transmit, to the UE, group common downlink control information (DCI) based on a group common identifier and a specific CSI-RS resource set among the at least one CSI-RS resource set; and
transmit, to the UE, a group common physical downlink shared channel (PDSCH) scheduled by the group common DCI,
wherein the at least one CSI-RS resource set is configured for at least one of one or more group common identifiers or one or more cell groups including the group common identifier.

14. A processing device configured to control a terminal in a wireless communication system, the processing device comprising:

at least one processor; and
at least one computer memory operatively coupled to the at least one processor and storing instructions for performing a method according to any one of claims 1 to 10 upon being executed by the at least one processor.

15. At least one non-transitory computer readable medium storing at least one instruction, wherein:
the at least one instruction executed by at least one processor controls a device to performs a method according to any one of claims 1 to 10 in a wireless communication system.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

## FIG.4

# FIG.5

Resource grid

A carrier
(up to 3300 subcarriers,i,e.,275 RBs)

A BWP

1 RB=12 subcarrier

1 RE

1 subcarrier

1 Symbol

l=0  .....

k=0

FIG.6

FIG.7

# FIG.8

DL assingment-to-PDSCH offset(K0)

slot

PDCCH

PDSCH

PUCCH

PDSCH-to-HARQ-ACK reporting offset(K1)

# FIG.9

# FIG.10

(a)

(b)

EP 4 429 156 A1

FIG.11

# FIG.12

```
        ┌─────────┐
        │  START  │
        └─────────┘
             │
             ▼
┌──────────────────────────────────────┐   S1210
│ Receive configuration information on at │
│ least one CSI-RS resource set for a TRS │
└──────────────────────────────────────┘
             │
             ▼
┌──────────────────────────────────────┐   S1220
│       Receive group common DCI        │
│ based on a group common identifier and │
│     a specific CSI-RS resource set     │
└──────────────────────────────────────┘
             │
             ▼
┌──────────────────────────────────────┐   S1230
│    Receive a group common PDSCH       │
│   scheduled by the group common DCI   │
└──────────────────────────────────────┘
             │
             ▼
        ┌─────────┐
        │   END   │
        └─────────┘
```

FIG.13

START

Transmit configuration information on at least one CSI-RS resource set for a TRS — S1310

Transmit group common DCI based on a group common identifier and a specific CSI-RS resource set — S1320

Transmit a group common PDSCH scheduled by the group common DCI — S1330

END

# FIG.14

## INTERNATIONAL SEARCH REPORT

| | International application No. |
|---|---|
| | **PCT/KR2022/017307** |

**A. CLASSIFICATION OF SUBJECT MATTER**

**H04L 5/00**(2006.01)i; **H04W 72/00**(2009.01)i; **H04W 72/04**(2009.01)i; **H04W 48/10**(2009.01)i

According to International Patent Classification (IPC) or to both national classification and IPC

**B. FIELDS SEARCHED**

Minimum documentation searched (classification system followed by classification symbols)

H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그룹 공통 정보(group common information), TRS(tracking reference signal), CSI-RS(channel state information-reference signal), 설정 정보(configuration information), DCI(downlink control information), PDSCH

**C. DOCUMENTS CONSIDERED TO BE RELEVANT**

| Category* | Citation of document, with indication, where appropriate, of the relevant passages | Relevant to claim No. |
|---|---|---|
| Y | US 2020-0178240 A1 (ZHANG, Yu et al.) 04 June 2020 (2020-06-04) See paragraphs [0072]-[0075], [0085] and [0090]; claims 1 and 12; and figures 5-6. | 1-2,7,9-15 |
| A | | 3-6,8 |
| Y | KR 10-2021-0008295 A (GUANGDONG OPPO MOBILE TELECOMMUNICATIONS CORP., LTD.) 21 January 2021 (2021-01-21) See paragraphs [0175]-[0180]; and figure 2. | 1-2,7,9-15 |
| Y | CATT. Configuration of TRS/CSI-RS for paging enhancement. R1-2102642, 3GPP TSG RAN WG1 #104b-e, e-Meeting. 07 April 2021. See sections 2.3.2 and 3. | 2,7 |
| A | SONY. Discussion On TRS/CSI-RS occasion(s) for idle/inactive UEs. R1-2103311, 3GPP TSG RAN WG1 #104bis-e, e-Meeting. 07 April 2021. See section 2. | 1-15 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 February 2023** | **17 February 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/017307** |

**C.    DOCUMENTS CONSIDERED TO BE RELEVANT**

| Category* | Citation of document, with indication, where appropriate, of the relevant passages | Relevant to claim No. |
|---|---|---|
| A | MODERATOR (SAMSUNG). Summary for TRS/CSI-RS occasion(s) for idle/inactive UEs. R1-2103251, 3GPP TSG RAN WG1 #104b-e, e-Meeting. 14 April 2021.<br>    See section 2. | 1-15 |

Form PCT/ISA/210 (second sheet) (July 2022)

INTERNATIONAL SEARCH REPORT
Information on patent family members

International application No.

**PCT/KR2022/017307**

| Patent document cited in search report | | | Publication date (day/month/year) | Patent family member(s) | | | Publication date (day/month/year) |
|---|---|---|---|---|---|---|---|
| US | 2020-0178240 | A1 | 04 June 2020 | CN | 110741580 | A | 31 January 2020 |
| | | | | EP | 3639428 | A1 | 22 April 2020 |
| | | | | EP | 3639428 | A4 | 10 March 2021 |
| | | | | US | 11356989 | B2 | 07 June 2022 |
| | | | | WO | 2018-227538 | A1 | 20 December 2018 |
| | | | | WO | 2018-228523 | A1 | 20 December 2018 |
| KR | 10-2021-0008295 | A | 21 January 2021 | AU | 2018-422466 | A1 | 19 December 2019 |
| | | | | BR | 112019026158 | A2 | 30 June 2020 |
| | | | | CA | 3065393 | A1 | 14 November 2019 |
| | | | | CA | 3065393 | C | 21 June 2022 |
| | | | | CN | 110710149 | A | 17 January 2020 |
| | | | | CN | 111106920 | A | 05 May 2020 |
| | | | | CN | 111106920 | B | 19 February 2021 |
| | | | | EP | 3621238 | A1 | 11 March 2020 |
| | | | | EP | 3621238 | A4 | 29 July 2020 |
| | | | | EP | 3621238 | B1 | 01 September 2021 |
| | | | | IL | 270850 | A | 30 January 2020 |
| | | | | JP | 2021-527966 | A | 14 October 2021 |
| | | | | MX | 2019015366 | A | 20 February 2020 |
| | | | | PH | 12019502679 | A1 | 08 June 2020 |
| | | | | RU | 2760209 | C1 | 22 November 2021 |
| | | | | TW | 201947975 | A | 16 December 2019 |
| | | | | US | 11463194 | B2 | 04 October 2022 |
| | | | | US | 2020-0106551 | A1 | 02 April 2020 |
| | | | | WO | 2019-213919 | A1 | 14 November 2019 |

Form PCT/ISA/210 (patent family annex) (July 2022)